(19) **Europäisches Patentamt / European Patent Office / Office européen des brevets**

(11) **EP 3 723 318 B1**

(12) **FASCICULE DE BREVET EUROPEEN**

(45) Date de publication et mention
de la délivrance du brevet:
**09.02.2022 Bulletin 2022/06**

(21) Numéro de dépôt: **20166779.7**

(22) Date de dépôt: **30.03.2020**

(51) Classification Internationale des Brevets (IPC):
*H04L 5/00* *(2006.01)*    *H04L 5/14* *(2006.01)*
*H04L 5/16* *(2006.01)*    *H04W 76/14* *(2018.01)*
*H04W 88/06* *(2009.01)*

(52) Classification Coopérative des Brevets (CPC):
**H04L 5/003;** H04L 5/006; H04L 5/0064;
H04L 5/0073; H04L 5/0085; H04L 5/0087;
H04L 5/14; H04L 5/16; H04W 76/14; H04W 88/06

(54) **PROCÉDÉ ET DISPOSITIF DE CONTRÔLE D'UN MODE DE TRANSMISSION DE DONNÉES UTILISÉ PAR UN VÉHICULE POUR COMMUNIQUER**

VERFAHREN UND VORRICHTUNG ZUR KONTROLLE EINES DATENÜBERTRAGUNGSMODUS, DER VON EINEM FAHRZEUG ZUM KOMMUNIZIEREN VERWENDET WIRD

METHOD AND DEVICE FOR CONTROLLING A DATA TRANSMISSION MODE USED BY A VEHICLE FOR COMMUNICATING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.04.2019 FR 1903769**

(43) Date de publication de la demande:
**14.10.2020 Bulletin 2020/42**

(73) Titulaire: **ORANGE**
**92130 Issy-les-Moulineaux (FR)**

(72) Inventeurs:
• **KELIF, Jean-Marc**
**92326 Chantillon (FR)**
• **DIEGO MAZA, William David**
**92326 Chantillon (FR)**

(56) Documents cités:
**WO-A1-2016/111638**    **US-A1- 2018 062 824**
**US-A1- 2018 167 832**

**Description**

Technique antérieure

L'invention se rapporte au domaine général des télécommunications. Elle concerne plus particulièrement les communications dans un réseau de communications sans fil, dans lequel les dispositifs connectés au réseau ont la possibilité, outre de communiquer avec les éléments du réseau (i.e. avec les stations de base ou points d'accès), de communiquer entre eux pair-à-pair (ou « peer-to-peer » en anglais).

On entend par communication pair-à-pair entre deux dispositifs, l'échange de données entre ces deux dispositifs sans passer par un serveur central. Aucune limitation n'est attachée au type de données échangées entre les dispositifs (voix, texte, etc.) lors d'une telle communication pair-à-pair, ni à la technologie de connectivité utilisée par les dispositifs pour détecter la présence de dispositifs voisins et se connecter entre eux en vue de communiquer pair-à-pair. Les dispositifs peuvent notamment utiliser une connectivité Bluetooth, WiFI (Wireless FIdelity), WiFI Direct, LTE (Long Term Evolution), etc.

Les communications pair-à-pair suscitent aujourd'hui un grand intérêt. Elles ont par exemple montré leur efficacité pour fournir des services de communication résilients dans des cas de rupture volontaire ou non des réseaux de communication classiques ; elles peuvent également être utilisées pour décharger les réseaux de communication classiques, ou pour se protéger contre une cybersurveillance, etc.

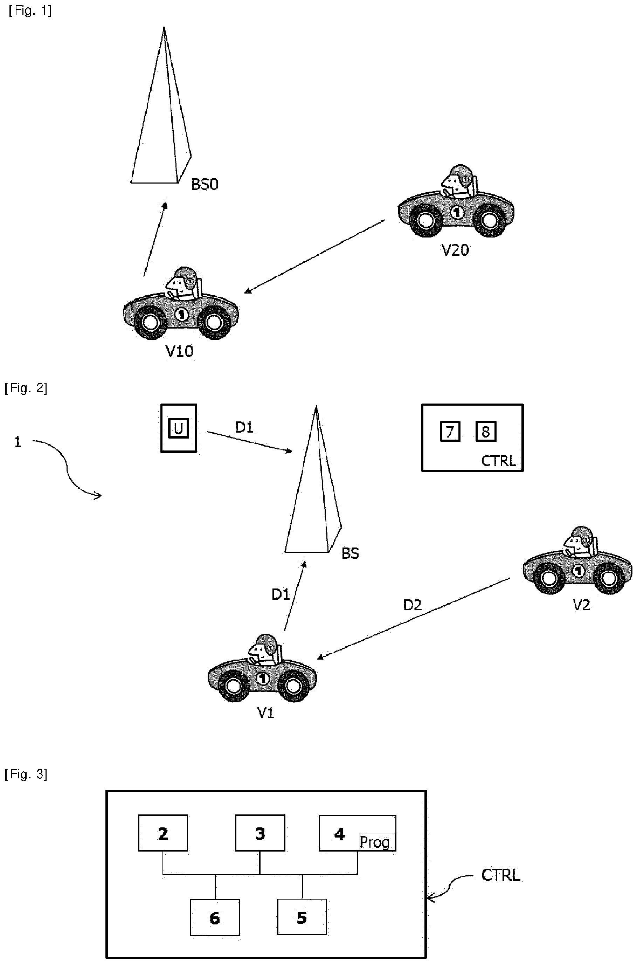

Dans le contexte de l'invention, on s'intéresse plus particulièrement aux communications entre deux véhicules (autrement dit deux dispositifs susceptibles d'être en mouvement), et une station de base d'un réseau de communication sans fil. Les véhicules considérés sont par exemple des véhicules terrestres tels que des voitures ou des trains, des véhicules aéroportés tels que des drones, etc.. On considère plus spécifiquement la situation illustrée sur la **figure 1** dans laquelle l'un des véhicules considérés émet (et/ou reçoit) des données vers (et/ou de) la station de base via l'autre véhicule. Une telle situation peut se présenter notamment lorsque l'un des véhicules a besoin d'émettre des données vers la station de base mais la qualité du signal qu'il reçoit de celle-ci est insuffisante, ou encore lorsque l'un des véhicules souhaite transmettre des données à la station de base mais a besoin, pour transmettre ces données, de données détenues par l'autre véhicule. Ces exemples ne sont bien entendu pas limitatifs en soi et donnés uniquement à titre illustratif.

La figure 1 représente un réseau de communication sans fil cellulaire comprenant une station de base BS0, et deux véhicules V10 et V20 connectés au réseau. Les véhicules V10 et V20 sont par exemple des voitures en mouvement. Pour recevoir ou émettre des données vers le réseau, un des deux véhicules, par exemple le véhicule V20, doit émettre ou recevoir des données vers la station de base qui gère la cellule dans laquelle il se trouve, en l'espèce ici la station de base BS0. On suppose ici que pour une raison quelconque, le véhicule V20 doit passer par le véhicule V10 pour émettre et/ou recevoir des données vers et/ou de la station de base BS0 : ainsi, V20 émet des données vers V10 puis V10 réémet les données qu'il a reçues de V20 (ou une version modifiée de ces données) vers la station de base BS0 (et inversement pour les données reçues par V10 de la station de base et destinées à V20).

Dans l'état de la technique, la transmission de V20 vers V10 et la transmission de V10 vers la station de base BS0 ne peuvent pas se faire simultanément en utilisant une même ressource radio, typiquement une même fréquence du spectre alloué au réseau. Autrement dit, les véhicules connectés au réseau sont configurés pour fonctionner selon un mode de transmission des données dit semi-duplex, plus communément appelé « half-duplex », permettant de limiter le niveau d'interférences subi par le véhicule V10 et de ne pas dégrader la qualité du signal reçu par celui-ci.

Le véhicule V10 ne peut donc pas recevoir des données du véhicule V20 et émettre simultanément des données (par exemple, celles qu'il reçoit du véhicule V20 au fur et à mesure qu'il les reçoit ou des données dérivées des données reçues du véhicule V20) vers la station de base BS0 sur la même fréquence. Il s'ensuit que les performances du réseau, notamment en termes de débit et d'efficacité spectrale, ne sont pas optimisées. La demande de brevet internationale WO2016/111638 A divulgue un procédé exécuté par un nœud de réseau permettant de sélectionner un mode de communication dans un réseau de communication sans fil. Le nœud de réseau obtient des informations relatives à des premier et second dispositifs sans fil dans le réseau de communication sans fil et indiquant que les premier et second dispositifs sans fil peuvent communiquer en utilisant un quelconque mode de communication dans un ensemble d'au moins trois modes de communication, à savoir au moins un mode de communication cellulaire, un mode de communication de dispositif à dispositif, D2D, en semi-duplex et un mode de communication D2D en duplex intégral. De plus, le nœud de réseau sélectionne un des modes de communication lorsqu'au moins un critère relatif à une capacité des premier et second dispositifs sans fil associés à un des modes de communication est satisfait et/ou lorsqu'au moins un critère relatif à une capacité de fonctionnement du nœud de réseau associé à un des modes de communication est satisfait. Z

Exposé de l'invention

L'invention vise à améliorer la situation décrite précédemment et à mieux utiliser les ressources du réseau.

Elle propose à cet effet un procédé de contrôle, par un contrôleur, d'un mode de transmission de données destiné à être utilisé par un premier véhicule pour communiquer avec un deuxième véhicule et une station de base d'un réseau de communications sans fil, ce procédé comprenant :

- une première étape de détermination si une condition est vérifiée, cette condition étant :

  une condition C1 : $I_{1,1} < I_{1,U}$ ; ou
  une condition C2 :

$$(W1/W2).\log(1+\mu_{HD,BS,1}) < 1/\varepsilon \text{ avec } \varepsilon = 1/\log(1+\mu_{FD,1,2}) - 1/\log(1+\mu_{HD,1,2}),$$

  où :
  W1 et W2 désignent respectivement des bandes passantes des canaux de transmission entre le premier véhicule et la station de base, et entre le deuxième véhicule et le premier véhicule ;
  $I_{1,1}$ est un niveau d'auto-interférence atteint au niveau du premier véhicule lorsqu'il fonctionne en full-duplex et émet des données vers la station de base sur une ressource radio sur laquelle simultanément il reçoit des données du deuxième véhicule ;
  $I_{1,U}$ est un niveau d'interférence généré au niveau du premier véhicule par un troisième dispositif de communication, lorsque le troisième dispositif de communication émet des données vers la station de base sur une ressource radio sur laquelle simultanément le premier véhicule, en mode hall-duplex, reçoit des données du deuxième véhicule ;
  $\mu_{HD,BS,1}$ est un rapport signal-sur-interférence-plus-bruit (SINR) reçu par la station de base lorsque le premier véhicule, en mode half-duplex, émet des données vers la station de base ;
  $\mu_{FD,1,2}$ est un rapport SINR reçu au niveau du premier véhicule lorsque le premier véhicule, en mode full-duplex, reçoit des données en provenance du deuxième véhicule sur une ressource radio sur laquelle simultanément le premier véhicule émet des données vers la station de base ; et
  $u_{HD,1,2}$ est un rapport SINR reçu au niveau du premier véhicule lorsque le premier véhicule, en mode half-duplex, reçoit des données du deuxième véhicule ;

- une étape d'activation d'un mode de transmission de données full-duplex au niveau du premier véhicule si la condition est vérifiée.

Corrélativement, l'invention concerne aussi un contrôleur configuré pour contrôler un mode de transmission de données utilisé par un premier véhicule pour communiquer avec un deuxième véhicule et avec une station de base d'un réseau de communications sans fil, ce contrôleur comprenant :

- un module de détermination configuré pour déterminer si une condition est vérifiée, cette condition étant :

  une condition C1 : $I_{1,1} < I_{1,U}$ ; ou
  une condition C2 :

$$(W1/W2).\log(1+\mu_{HD,BS,1}) < 1/\varepsilon \text{ avec } \varepsilon = 1/\log(1+\mu_{FD,1,2}) - 1/\log(1+\mu_{HD,1,2}),$$

  où :
  W1 et W2 désignent respectivement des bandes passantes des canaux de transmission entre le premier véhicule et la station de base, et entre le deuxième véhicule et le premier véhicule ;
  $I_{1,1}$ est un niveau d'auto-interférence atteint au niveau du premier véhicule lorsqu'il fonctionne en full-duplex et émet des données vers la station de base sur une ressource radio sur laquelle simultanément il reçoit des données du deuxième véhicule ;
  $I_{1,U}$ est un niveau d'interférence généré au niveau du premier véhicule par un troisième dispositif de communication, lorsque le troisième dispositif de communication émet des données vers la station de base sur une ressource radio sur laquelle simultanément le premier véhicule, en mode hall-duplex, reçoit des données du deuxième véhicule ;

$\mu_{HD,BS,1}$ est un rapport signal-sur-interférence-plus-bruit (SINR) reçu par la station de base lorsque le premier véhicule, en mode half-duplex, émet des données vers la station de base ;

$\mu_{FD,1,2}$ est un rapport SINR reçu au niveau du premier véhicule lorsque le premier véhicule, en mode full-duplex, reçoit des données en provenance du deuxième véhicule sur une ressource radio sur laquelle simultanément le premier véhicule émet des données vers la station de base ; et

$\mu_{HD,1,2}$ est un rapport SINR reçu au niveau du premier véhicule lorsque le premier véhicule, en mode half-duplex, reçoit des données du deuxième véhicule ;

- un module d'activation configuré pour activer si la condition est vérifiée, un mode full-duplex de transmission de données au niveau du premier véhicule.

On note qu'aucune hypothèse n'est faite quant à la nature du troisième dispositif de communication. Il peut s'agit d'un équipement utilisateur quelconque, fixe ou en mouvement, qui est apte à communiquer avec la station de base du réseau et/ou pair-à-pair avec d'autres dispositifs du réseau.

Dans un exemple privilégié d'application de l'invention, les données transmises par le premier véhicule vers la station de base comprennent les données (sous forme originale ou modifiée) transmises par le deuxième véhicule vers le premier véhicule (elles peuvent par ailleurs comprendre d'autres données en supplément). Cet exemple modélise notamment le cas où le premier véhicule sert de relai vers la station de base au deuxième véhicule pour émettre ses données. On note que l'invention peut également s'appliquer dans d'autres contextes, y compris lorsque les données transmises par le premier véhicule vers la station de base comprennent seulement une partie des données reçues du deuxième véhicule (sous forme originale ou modifiée), voire des données différentes de celles reçues du deuxième véhicule.

De façon connue, un mode « full-duplex », ou duplex intégral, de transmission de données est un mode de transmission de données dans lequel les données circulent au niveau des dispositifs mettant en œuvre ce mode de transmission de façon bidirectionnelle et simultanément : ainsi chaque dispositif peut émettre et recevoir des données simultanément en utilisant la même ressource radio, par exemple la même fréquence ou la même bande de fréquences. Lorsque le premier véhicule est configuré suivant un mode de transmission full-duplex, il peut donc recevoir des données du deuxième véhicule sur une ressource radio (ex. sur une fréquence donnée) et émettre simultanément des données vers la station de base sur cette même ressource radio.

Ceci permet d'accélérer le temps de transmission des données du deuxième véhicule vers la station de base via le premier véhicule tout en préservant les ressources radio du réseau en raison de l'utilisation simultanée de la même ressource radio. L'efficacité spectrale du réseau est ainsi améliorée par rapport à l'état de la technique où seul un mode de transmission half-duplex est envisagé.

En outre, l'efficacité énergétique au niveau du premier véhicule est également accrue : le temps pendant lequel le premier véhicule doit rester actif pour recevoir des données du deuxième véhicule et émettre des données vers la station de base est diminué en mode full-duplex ce qui permet au premier véhicule de diminuer sa consommation énergétique (et ainsi d'économiser ses ressources d'énergie).

Pour atteindre ce résultat, l'invention active avantageusement le mode full-duplex de transmission de données au niveau du premier véhicule lorsque le contrôleur détermine qu'une condition prédéfinie, qui est choisie au moins parmi les conditions C1 et C2 précitées, est vérifiée. Les conditions C1 et C2 ont été avantageusement définies par les inventeurs pour garantir que le temps de transmission nécessaire en mode full-duplex pour acheminer des données du deuxième véhicule vers le premier véhicule et du premier véhicule jusqu'à la station de base est inférieur au temps de transmission correspondant nécessaire en mode half-duplex, et ce, sans pour autant sacrifier les performances atteintes lors de cette transmission en termes de probabilité d'erreur. Les inventeurs ont en effet utilisé pour dériver les deux conditions C1 et C2, la relation de Shannon donnant la capacité d'un canal en fonction du rapport signal-sur-interférence-plus-bruit (SINR) sur ce canal. Or, de façon connue en soi, la capacité d'un canal désigne la limite supérieure du débit de données qui peut être transmis de manière fiable sur ce canal, c'est-à-dire avec une probabilité d'erreur qui tend vers zéro.

Ainsi, le mode de transmission full-duplex permettant par ailleurs d'économiser des ressources radio et d'atteindre une meilleure efficacité spectrale, cela signifie que lorsque l'une des conditions C1 ou C2 est vérifiée, il y a tout intérêt à activer le mode full-duplex au niveau du premier véhicule comme le propose l'invention, car les performances sont optimisées à tout niveau (gain de temps, gain d'efficacité spectrale et gain énergétique au niveau du premier véhicule).

Il convient de noter que la condition C1 est plus simple à examiner pour le contrôleur que la condition C2, en raison notamment des quantités qu'elle met en jeu. Il suffit en effet au contrôleur de comparer deux niveaux d'interférence qu'il peut obtenir aisément du premier véhicule et du troisième dispositif ou dériver à partir d'informations obtenues du premier véhicule et du troisième dispositif pour déterminer si la condition C1 est vérifiée.

Aucune limitation n'est attachée à la façon dont le contrôleur détermine si la condition prédéfinie C1 ou C2 est vérifiée ou non. Ce peut être par exemple en évaluant et en comparant les SINR ou les ratios impliqués dans ces conditions, en démontrant les relations inverses, en considérant des approximations des termes de ces conditions, etc.

Ainsi, par exemple, le niveau d'auto-interférence $I_{1,1}$ peut être aisément dérivé à partir du facteur d'auto-interférence du premier véhicule et de sa puissance d'émission lorsqu'il émet des données vers la station de base. De façon connue en soi, le facteur d'auto-interférence traduit l'interférence résiduelle, après annulation par le premier véhicule de l'interférence générée par les autres dispositifs du réseau utilisant les mêmes ressources radio que lui, qui est due à la transmission par le premier véhicule de données en même temps et sur la même ressource radio (ex. fréquence) qu'il en reçoit (autrement dit de son fonctionnement en mode full-duplex). On note que l'annulation des interférences peut être mise par le premier véhicule au moyen d'un algorithme d'élimination d'interférences connu en soi, comme par exemple un algorithme d'élimination successive ou parallèle d'interférences ou un algorithme d'élimination d'auto-interférence.

A titre illustratif, si le premier véhicule a une puissance d'émission P1 et un facteur d'autointerférence de 1, le niveau d'auto-interférence au niveau du premier véhicule due à cette transmission est égal à P1. Si le facteur d'auto-interférence vaut -70dB, le niveau d'auto-interférence due à cette transmission est égal à $P1.10^{-7}$.

Dans un autre mode de réalisation, pour déterminer si la condition C1 est vérifiée, le contrôleur peut estimer les ratios $\mu_{FD,1,1}$ et $\mu_{HD,1,U}$,
avec $\mu_{F,D1,1} = I_{1,1}/(I_{oth}+N_{th})$ et $\mu_{HD,1,U} = I_{1,U}/(I_{1,U}+I_{oth}+N_{th})$ et vérifier si :

$$\mu_{FD,1,1} < \mu_{HD,1,U}/(1- \mu_{HD,1,U})$$

Dans un mode particulier de réalisation, dans lequel la première étape de détermination consiste à déterminer si la condition C1 est vérifiée, le procédé de contrôle comprend une comparaison :

-   d'une distance entre le premier véhicule et le troisième dispositif de communication ; avec
-   un ratio, élevé à la puissance n où n désigne l'inverse d'un exposant d'affaiblissement de trajet :

    d'un produit d'un facteur de propagation par une puissance d'émission du troisième dispositif de communication lorsque ledit troisième dispositif de communication émet des données vers la station de base sur une ressource radio sur laquelle simultanément le premier véhicule, en mode hall-duplex, reçoit des données du deuxième véhicule, et
    du niveau d'auto-interférence $I_{1,1}$ ;

la condition C1 étant vérifiée si la distance est inférieure au ratio.

Ce mode de réalisation est une alternative simple au calcul des rapports $\mu_{FD,1,1}$ et $\mu_{HD,1,3}$ pour déterminer si la condition C1 est vérifiée ou non. Il résulte d'une approximation de l'interférence $I_{1,U}$ générée par le troisième dispositif de communication à partir de la puissance d'émission du troisième dispositif de communication, de paramètres de propagation traduisant l'atténuation de cette puissance par le canal de propagation séparant le premier véhicule du troisième dispositif de communication, et de la position relative du premier véhicule par rapport au troisième dispositif de communication. Une telle approximation est connue en soi et modélise la propagation des ondes en espace libre.

Pour mettre en œuvre ce mode de réalisation, le procédé de contrôle peut comprendre en outre :

-   une étape de réception, en provenance du premier véhicule, du niveau d'auto-interférence $I_{1,1}$, ou d'un facteur d'auto-interférence du premier véhicule et d'une puissance d'émission du premier véhicule ; et/ou
-   une étape de réception, en provenance du troisième dispositif de communication ou de ladite station de base, de la puissance d'émission du troisième dispositif de communication.

La distance entre le premier dispositif mobile et le troisième dispositif de communication peut par ailleurs être aisément déterminée par le contrôleur à partir d'une position du premier véhicule mesurée par le premier véhicule et/ou d'une position du troisième dispositif de communication mesurée par le troisième dispositif de communication. A cet effet, le premier véhicule et/ou le troisième dispositif de communication peuvent être équipés d'un récepteur de type GPS (Global Positioning System) leur permettant de connaître leur localisation.

Comme mentionné précédemment, la condition C1 peut s'avérer plus simple à analyser que la condition C2. Ainsi, dans un mode particulier de réalisation, on peut envisager de hiérarchiser l'analyse par le contrôleur des conditions C1 et C2.

Plus précisément, dans ce mode de réalisation, la première étape de détermination consiste à déterminer si la condition C1 est vérifiée, et si la condition C1 n'est pas vérifiée, le procédé comprend en outre :

- une deuxième étape de détermination si la condition C2 est vérifiée ; et
- une étape d'activation du mode full-duplex de transmission de données au niveau du premier véhicule si la condition C2 est vérifiée.

Ce mode de réalisation permet d'optimiser encore davantage l'utilisation des ressources radio du réseau. En effet, les inventeurs ont pu démontrer, toujours en s'appuyant sur la relation de Shannon, que lorsque la condition C1 n'est pas vérifiée, on peut encore sous la condition C2, atteindre un temps de transmission en full-duplex inférieur au temps de transmission en half-duplex.

Ce mode de réalisation propose donc pour déterminer si le mode full-duplex doit être activé au niveau du premier véhicule, de tester les deux conditions C1 et C2 afin de tirer un maximum de profit de l'utilisation du mode de transmission full-duplex. Les deux conditions sont testées dans un ordre avantageux consistant d'abord à tester la condition C1 puis, seulement si celle-ci n'est pas vérifiée, de tester la condition C2. Cet ordre avantageux permet d'optimiser les ressources du contrôleur.

Dans un autre mode de réalisation, la première étape de détermination consiste à déterminer si la condition C1 est vérifiée, et si la condition C1 n'est pas vérifiée, le procédé comprend en outre :

- une troisième étape de détermination si une condition C3 telle que :

$$\mu_{FD,1,1} < \mu_0/[\exp(1/(B+C)-1]-1$$

avec :

$$\mu_{FD,1,1} = I_{1,1}/(I_{oth}+N_{th})$$

$$B = 1/\log(1+\mu_0(1-\mu_{HD,1,U}))$$

$$C = W2/[W1.\log(1+\mu_{HD,BS,1}))]$$

$$\mu_0 = P_2^{(1)}/(I_{oth}+N_{th})$$

$$\mu_{HD,1,U} = I_{1,U}/(I_{1,U}+I_{oth}+N_{th})$$

où :

$P_2^{(1)}$ est une puissance des données reçues par le premier véhicule en provenance du deuxième véhicule ; $I_{oth}$ est un niveau d'interférence généré au niveau du premier véhicule par au moins un quatrième dispositif émettant des données sur une ressource radio sur laquelle simultanément, le premier véhicule, en mode full-duplex, émet des données vers la station de base et reçoit des données du deuxième véhicule ou sur laquelle simultanément le premier véhicule, en mode half-duplex, reçoit des données du deuxième véhicule ; et $N_{th}$ est un niveau de bruit reçu par le premier véhicule ;

- une étape d'activation du mode full-duplex de transmission de données au niveau du premier véhicule si la condition C3 est vérifiée.

Ce mode de réalisation propose de tester une nouvelle condition C3 pour déterminer s'il existe un intérêt à activer le mode de transmission full-duplex au niveau du premier véhicule. Dans ce mode de réalisation, la condition C3 est testée seulement après la condition C1, si la condition C1 n'est pas vérifiée. On note que l'analyse de la condition C3 présente un niveau de difficulté intermédiaire pour le contrôleur par rapport à l'analyse de la condition C1 et à l'analyse de la condition C2.

De ce fait, on peut envisager de compléter ce mode de réalisation, si la condition C3 n'est pas vérifiée, par :

- une quatrième étape de détermination si la condition C2 est vérifiée ; et

- une étape d'activation du mode full-duplex de transmission de données au niveau du premier véhicule si la condition C2 est vérifiée.

Ce mode de réalisation permet de tester tout ou partie des conditions garantissant que le temps de transmission en mode full duplex est inférieur au temps de transmission en mode half duplex tout en économisant lorsque cela est possible les ressources du contrôleur.

Dans un mode particulier de réalisation, la première, et le cas échéant, la deuxième, la troisième et la quatrième étape de détermination sont reproduites à différents instants.

Ces différents instants peuvent être séparés d'une période de temps régulière, autrement dit, le contrôleur réévalue la ou les conditions C1, C2, C3 de façon périodique, voire quasi-continue si la période de temps choisie est relativement petite. Ceci permet de s'adapter aux conditions changeantes susceptibles d'être subies par le premier véhicule et/ou le deuxième véhicule et de réévaluer à différents instants l'opportunité d'actionner le mode de transmission en full-duplex au niveau du premier véhicule. En effet, les premier et deuxième véhicules étant en mouvement, les différentes quantités évaluées dans le cadre de l'invention (SINR et autres ratios) sont susceptibles de varier en fonction du temps, notamment en fonction de la vitesse du premier véhicule.

En variante, les différents instants auxquels sont reproduites les étapes de détermination peuvent correspondre à la détection par le contrôleur d'événements prédéterminés, comme par exemple la détection d'un nouveau dispositif de communication (différent du troisième dispositif de communication) émettant vers la station de base en utilisant la même ressource radio que le premier et le deuxième véhicule, une communication pair-à-pair entre de nouveaux véhicules, etc.

On peut en outre envisager que si le contrôleur détermine qu'aucune des conditions C1, C2 ou C3 n'est plus vérifiée à un instant donné alors que le premier véhicule se trouve en mode full-duplex, de désactiver ce mode full-duplex au niveau du premier véhicule.

Dans un mode particulier de réalisation, la première, et le cas échéant, la deuxième, la troisième et la quatrième étape de détermination sont mises en oeuvre si un débit de transmission des données entre le deuxième véhicule et le premier véhicule est inférieur à un débit de transmission des données entre le premier véhicule et la station de base.

On note que ce cas de figure où le débit de transmission sur le réseau cellulaire est meilleur que le débit de transmission pair-à-pair est celui qui est le plus souvent rencontré en pratique.

Dans ce mode de réalisation, lorsque le débit de transmission des données entre le deuxième véhicule et le premier véhicule est supérieur au débit de transmission des données entre le premier véhicule et la station de base, le procédé de contrôle peut comprendre en outre :

- une cinquième étape de détermination si une condition est vérifiée, ladite condition étant choisie parmi:

  une condition C4 : $\mu_{FD,BS,1} > \exp(1/A) - 1$
  avec A$= \alpha/109(1+\mu_{HD,1,2})+1/\log(1+\mu_{HD,BS,1})$, $\alpha=(VOL2/VOL1).(W1/W2)$ et où $\mu_{FD,BS,1}$ désigne le SINR reçu par la station de base lorsque le premier véhicule, en mode full-duplex, émet un volume VOL1 de données vers la station de base et reçoit simultanément sur la même ressource radio un volume VOL2 de données du deuxième véhicule, et
  une condition C5 :

$$1/[W2.\log(1+ \mu_{FD,1,2})] < 1/[W2.\log(1+\mu_{HD,1,2})]+(VOL1.W2)/[VOL2.W1.\log(1+\mu_{HD,BS,1})]$$

- une étape d'activation du mode full-duplex de transmission de données au niveau du premier véhicule si ladite condition choisie parmi les conditions C4 et C5 est vérifiée.

Ce mode de réalisation est très complet et permet de traiter les cas de figure plus marginaux où le débit de transmission pair-à-pair est meilleur que celui sur le réseau cellulaire, quel que soit les volumes de données transmis du deuxième véhicule vers le premier véhicule et du premier véhicule vers la station de base.

Dans un mode particulier de réalisation, les différentes étapes du procédé de contrôle sont déterminées par des instructions de programmes d'ordinateurs.

L'invention vise ainsi également un programme d'ordinateur sur un support d'enregistrement, ce programme étant susceptible d'être mis en oeuvre dans un ordinateur ou plus généralement dans un contrôleur conforme à l'invention. Ce programme comporte des instructions adaptées à la mise en œuvre d'un procédé de contrôle tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisible par un ordinateur, et comportant des instructions du programme d'ordinateur tel que mentionné ci-dessus.

Ce support d'information ou d'enregistrement peut être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple un disque dur ou une mémoire flash.

D'autre part, le support d'information ou d'enregistrement peut être un support transmissible tel qu'un signal électrique ou optique, qui peut être acheminé via un câble électrique ou optique, par lien radio, par lien optique sans fil ou par d'autres moyens.

Le programme selon l'invention peut être en particulier téléchargé sur un réseau de type Internet.

Alternativement, le support d'informations ou d'enregistrement peut être un circuit intégré dans lequel un programme est incorporé, le circuit étant adapté pour exécuter ou pour être utilisé dans l'exécution du procédé de communication, conforme à l'invention, ou du procédé de sélection, conforme à l'invention.

Selon un autre aspect, l'invention vise aussi un système de transmission comprenant :

- au moins un premier véhicule, un deuxième véhicule et une station de base d'un réseau de communications sans fil, le premier véhicule et le deuxième véhicule étant aptes à communiquer entre eux pair-à-pair et avec la station de base ; et
- un contrôleur conforme à l'invention, configuré pour contrôler un mode de transmission de données utilisé par le premier véhicule pour communiquer avec le deuxième véhicule et avec la station de base.

Le contrôleur peut être embarqué par exemple dans une station de base ou dans une entité de gestion centralisée du réseau de communications sans fil.

Le système de transmission bénéficie des mêmes avantages cités précédemment que le procédé de contrôle et le contrôleur selon l'invention.

On peut également envisager, dans d'autres modes de réalisation, que le procédé de contrôle, le contrôleur et le système de transmission selon l'invention présentent en combinaison tout ou partie des caractéristiques précitées.

## Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] la figure 1, déjà décrite, représente un réseau cellulaire dans lequel un véhicule V20 envoie des données à une station de base BS0 via un véhicule V10 ;

[Fig. 2] la figure 2 représente, dans son environnement, un système de transmission conforme à l'invention, dans un mode particulier de réalisation ;

[Fig. 3] la figure 3 illustre schématiquement l'architecture matérielle d'un contrôleur conforme à l'invention, dans un mode particulier de réalisation ; et

[Fig. 4] la figure 4 représente sous forme d'ordinogramme, les principales étapes mises en oeuvre par le contrôleur de la figure 3 pour déterminer le mode de transmission de données appliqué par un véhicule du système de transmission de la figure 2, dans un mode particulier de réalisation.

## Description de modes de réalisation

La **figure 2** représente, dans son environnement, un système de transmission 1 conforme à l'invention, dans un mode particulier de réalisation.

Ce système de transmission 1 est intégré dans un réseau sans fil cellulaire NW, dont chaque cellule est gérée par une station de base. Aucune limitation n'est attachée à la nature du réseau, ni au nombre de cellules qu'il comporte. Il peut s'agir par exemple d'un réseau sans fil de 4$^{ème}$ ou 5$^{ème}$ Génération (i.e. 4G ou 5G). Le réseau sans fil NW permet à différents types d'équipements utilisateurs de communiquer entre eux, comme par exemple à des terminaux tels que des téléphones portables, des ordinateurs ou des tablettes numériques, mais également à divers objets connectés, qui peuvent être fixes ou en mouvement, et notamment à des véhicules (ex. voitures, drones, trains, etc.). On suppose que ces objets connectés peuvent communiquer entre eux via le réseau sans fil NW, mais également pair-à-pair, par exemple lorsqu'ils se trouvent à proximité l'un de l'autre, ou lorsque leur connexion avec le réseau NW est défaillante, etc. Aucune limitation n'est attachée à la raison qui déclenche une communication pair-à-pair entre deux objets connectés dans le contexte de l'invention.

Dans l'exemple envisagé à la figure 2, le système de transmission 1 comprend plus particulièrement :

- une station de base BS gérant une cellule (non représentée) du réseau NW, et permettant aux équipements utilisateurs se trouvant dans la cellule de se connecter au réseau NW par son intermédiaire ;
- un premier véhicule V1 et un deuxième véhicule V2, connectés ici au réseau NW, et aptes également à communiquer entre eux pair-à-pair. On suppose ici ces véhicules en mouvement ;
- un équipement utilisateur U, connecté au réseau NW via la station de base BS. Cet équipement utilisateur est par exemple, à titre illustratif, un terminal d'un utilisateur, tel un téléphone portable, mais aucune limitation n'est attachée à la nature de cet équipement utilisateur, qui peut être indifféremment fixe ou mobile, c'est-à-dire en mouvement ; et
- un contrôleur CTRL conforme à l'invention.

On suppose ici que chacun des équipements utilisateurs considérés (véhicules V1, V2 et équipement utilisateur U) sont équipés d'un module d'élimination d'interférences, mettant en oeuvre par exemple un algorithme d'élimination successive ou parallèle d'interférences et/ou un algorithme d'élimination d'auto-interférence pour les équipements utilisateurs amenés à fonctionner en mode full duplex. Un tel module est connu de l'homme du métier et n'est pas décrit davantage ici.

On considère ici à titre illustratif, une transmission de données D2 du véhicule V2 vers le véhicule V1 via une liaison pair-à-pair, et une transmission de données D1 via le réseau sans fil NW du véhicule V1 vers la station de base BS. Dans l'exemple considéré, les données D1 comprennent les données D2 transmises par le véhicule V2, et peuvent comprendre éventuellement des données supplémentaires ajoutées par le véhicule V1. En d'autres mots le volume, noté VOL1, des données D1 est supérieur ou égal au volume, noté VOL2, des données D2.

On suppose par ailleurs que les différents équipements utilisateurs connectés au réseau NW et la station de base BS communiquent entre eux via le réseau NW ou pair-à-pair, et sont configurés par défaut pour adopter lors de leurs communications un mode de transmission de données half-duplex, celui-ci limitant les interférences générées lors de ces communications.

Cette hypothèse n'est bien entendu pas limitative en soi et d'autres situations dans lesquelles plusieurs équipements utilisateurs communiquent entre eux pair-à-pair tandis que l'un au moins d'entre eux communique via le réseau NW avec la station de base BS peuvent être envisagées.

Conformément à l'invention, dans une telle situation, le contrôleur CTRL contrôle le mode de transmission utilisé par le véhicule V1 qui est impliqué à un instant donné dans deux communications avec respectivement le véhicule V2 et la station de base BS. Plus précisément, il s'agit pour le contrôleur CTRL de sélectionner pour le véhicule V1 un mode de transmission de données parmi :

- un mode de transmission de données half-duplex dans lequel le véhicule V1 ne peut communiquer, c'est-à-dire émettre et recevoir des données, qu'avec un seul dispositif à un instant donné en utilisant une même ressource radio (par exemple une fréquence du spectre alloué au réseau sans fil NW) ; et
- un mode de transmission de données full-duplex dans lequel le véhicule V1 peut simultanément émettre des données vers un dispositif et recevoir des données d'un dispositif en utilisant la même ressource radio (par exemple une fréquence du spectre alloué au réseau sans fil NW).

A cet effet, le procédé de contrôle selon l'invention est mis en oeuvre au sein du contrôleur CTRL au moyen de composants logiciels et/ou matériels définissant différents modules fonctionnels dûment configurés (modules de détermination, d'activation, etc.).

Plus particulièrement, dans le mode de réalisation décrit ici, le contrôleur CTRL est intégré dans une entité de gestion centralisée du réseau sans fil NW (par exemple dans un serveur du réseau NW) et a l'architecture matérielle d'un ordinateur, telle qu'illustrée schématiquement à la **figure 3.** Il comprend notamment un processeur 2, une mémoire vive 3, une mémoire morte 4, une mémoire flash non volatile 5 ainsi que des moyens de communication 6 lui permettent de communiquer avec les différents équipements utilisateurs connectés au réseau sans fil NW (via notamment dans l'exemple envisagé ici, la station de base BS).

La mémoire morte 4 du contrôleur CTRL constitue ici un support d'enregistrement conforme à l'invention, lisible par le processeur 2 et sur lequel est enregistré un programme d'ordinateur PROG conforme à l'invention, comportant des instructions pour l'exécution des étapes d'un procédé de contrôle selon l'invention.

Autrement dit, le programme d'ordinateur PROG définit les différents modules fonctionnels du contrôleur CTRL lui permettant de mettre en oeuvre le procédé de contrôle selon l'invention, à savoir, dans le mode de réalisation décrit ici (cf. figure 2) :

- un module de détermination 7, configuré pour déterminer si une condition prédéfinie C (détaillée davantage ultérieurement) est vérifiée ; et

- un module d'activation 8, configuré pour activer le cas échéant (c'est-à-dire si la condition C est vérifiée) un mode de transmission full-duplex au niveau du véhicule V1 pour communiquer avec le véhicule V2 et la station de base BS.

Dans un autre mode de réalisation, le contrôleur CTRL peut être intégré dans un autre dispositif que dans une entité de gestion centralisée du réseau NW, comme par exemple dans une station de base du réseau NW (ex. dans la station de base BS), ou dans un équipement utilisateur du réseau NW.

Conformément à l'invention, le contrôleur CTRL est configuré pour activer le mode de transmission full-duplex au niveau du véhicule V1 lors de ses communications avec le véhicule V2 et avec la station de base BS, lorsqu'une condition déterminée C est satisfaite. Dans le mode de réalisation décrit ici, le contrôleur CTRL, et plus particulièrement son module de détermination 7, est configuré pour tester de manière hiérarchique plusieurs conditions notées C1, C2 et C3. En variante, on peut envisager autant de modules de détermination que de conditions à tester.

Plus spécifiquement, le module de détermination 7 du contrôleur CTRL est configuré pour tester dans un premier temps la condition C1, puis si la condition C1 n'est pas vérifiée, la condition C3, puis si la condition C3 n'est pas vérifiée, la condition C2. Ce mode de réalisation lui permet avantageusement de tester les conditions C1, C2 et C3 par ordre de complexité croissant.

En variante, une hiérarchie différente peut être adoptée, ou moins de conditions peuvent être testées, comme détaillé davantage ultérieurement. Préférentiellement toutefois, on testera au moins et en premier lieu la condition C1, qui est la condition la plus simple à vérifier.

Les conditions C1, C2, et C3 sont définies respectivement de la façon suivante :

- Condition C1 :

$$I_{1,1} < I_{1,U}$$

- Condition C2 :

$$(W1/W2).\log(1+\mu_{HD,BS,1}) < 1/\varepsilon$$

avec

$$\varepsilon=1/\log(1+\mu_{FD,1,2}) - 1/\log(1+\mu_{HD,1,2}) \ ;$$

- Condition C3 :

$$\mu_{FD,1,1} < \mu_0/(\exp(1/(B+C)-1)-1$$

avec $B=1/\log(1+\mu_0(1-\mu_{HD,1,U}))$, $C=W2/[W1.\log(1+\mu_{HD,BS,1}))]$, et $\mu_{HD,1,U}=I_{1,U}/(I_{1,U}+I_{oth}+N_{th})$ , où :

- W1 et W2 désignent respectivement les bandes passantes des canaux de transmission entre le véhicule V1 et la station de base BS, et entre le véhicule V2 et le véhicule V1 ;
- $I_{1,1}$ est un niveau d'auto-interférence atteint au niveau du véhicule V1 lorsque celui-ci fonctionne en full-duplex et émet les données D1 vers la station de base BS sur une ressource radio sur laquelle simultanément il reçoit les données D2 du véhicule V2. Dans l'exemple envisagé ici, cette ressource radio est une fréquence f0 donnée du spectre de fréquences alloué au réseau NW ;
- $I_{1,U}$ est un niveau d'interférence généré au niveau du véhicule V1 par un autre dispositif de communication (par exemple dans l'exemple envisagé ici, par l'équipement utilisateur U) que les véhicules V1 et V2 (troisième dispositif au sens de l'invention), lorsque ce dispositif U émet des données D vers la station de base BS sur la ressource radio f0 sur laquelle simultanément le véhicule V1, en mode half-duplex, reçoit les données D2 du véhicule V2. On note qu'on fait l'hypothèse ici, pour un souci de performance, que la station de base BS ne peut à un instant donné recevoir des données sur une ressource radio (en l'espèce ici sur la fréquence f0) que d'un seul équipement utilisateur connecté à cette station de base BS ;
- $I_{oth}$ est un niveau d'interférence généré au niveau du véhicule V1 par d'autres dispositifs de communication (c'est-à-dire différents du véhicule V1, du véhicule V2 et de l'équipement utilisateur U) émettant des données sur une ressource radio (en l'espèce ici sur la fréquence f0) sur laquelle simultanément, le véhicule V1, en mode full-duplex, émet les données D1 vers la station de base BS et reçoit les données D2 du véhicule V2 ou sur laquelle simultanément le véhicule V1, en mode half-duplex, reçoit les données D2 du véhicule V2 ;

- $N_{th}$ est un niveau de bruit reçu par le véhicule V1 (en mode full-duplex ou en mode half-duplex) ;
- $\mu_{HD,BS,1}$ est un rapport signal-sur-interférence-plus-bruit (SINR) reçu par la station de base BS lorsque le véhicule V1, en mode half-duplex, émet les données D1 vers la station de base BS ;
- $\mu_{FD,1,2}$ est un rapport SINR reçu au niveau du véhicule V1 lorsque le véhicule V1, en mode full-duplex, reçoit les données D2 en provenance du véhicule V2 sur une ressource radio (en l'espèce ici sur la fréquence f0) sur laquelle simultanément le véhicule V1 émet les données D1 vers la station de base BS ;
- $\mu_{HD,1,2}$ est un rapport SINR reçu au niveau du véhicule V1 lorsque le véhicule V1, en mode half-duplex, reçoit les données D2 du véhicule V2 ; et
- $\mu_0$ est un ratio d'une puissance des données D2 reçues par le véhicule V1 en provenance du véhicule V2, et de la somme du niveau d'interférence $I_{oth}$ et du niveau de bruit $N_{th}$.

Pour dériver les conditions C1-C3 qui sont considérées conformément à l'invention pour déclencher au niveau du véhicule V1 le mode de transmission de données full-duplex, les inventeurs se sont intéressés aux hypothèses conduisant à un temps de transmission $T_{FD}(D2,D1)$ des données D2 du véhicule V2 vers le véhicule V1 et des données D1 du véhicule V1 vers la station de base BS lorsque le véhicule V1 fonctionne en mode full-duplex inférieur au temps de transmission correspondant $T_{HD}(D2,D1)$ lorsque le véhicule V1 fonctionne en mode half-duplex. Le véhicule V2 fonctionne ici en mode half-duplex.

En mode full-duplex, les données D1 et D2 pouvant être émises et reçues simultanément sur la même ressource radio (fréquence f0 ici), il résulte que le temps de transmission $T_{FD}(D2,D1)$ est égal à :

$$T_{FD}(D2,D1)=VOL2/(\min(R_{FD}(D2),R_{FD}(D1))+(VOL1-VOL2)/R_{FD}(D1)$$

où $R_{FD}(D2)$ et $R_{FD}(D1)$ désignent respectivement le débit de la liaison entre le véhicule V2 et le véhicule V1 et le débit de la liaison entre le véhicule V1 et la station de base BS lorsque le véhicule V1 fonctionne en mode full-duplex (on suppose ici que dès que le véhicule V1 commence à recevoir des données (dites « premières données ») du véhicule V2, il est en mesure de les émettre vers la station de base BS et on néglige le temps nécessaire pour que ces premières données parviennent au véhicule V1).

En mode half-duplex, les données D1 et D2 ne pouvant pas être émises et reçues simultanément sur la même ressource radio (fréquence f0 ici), il résulte que le temps de transmission $T_{HD}(D2,D1)$ est égal à :

$$T_{HD}(D2,D1)= T_{HD}(D2)+ T_{HD}(D1)=VOL2/R_{HD}(D2)+VOL1/R_{HD}(D1)$$

où :

- $TH_D(D2)$ et $T_{HD}(D1)$ désignent respectivement les temps de transmission lorsque le véhicule V1 fonctionne en mode half-duplex des données D2 du véhicule V2 vers le véhicule V1 et des données D1 du véhicule V1 vers la station de base BS ; et
- $R_{HD}(D2)$ et $R_{HD}(D1)$ désignent respectivement le débit de la liaison entre le véhicule V2 et le véhicule V1 et le débit de la liaison entre le véhicule V1 et la station de base BS lorsque le véhicule V1 fonctionne en mode half-duplex.

Les inventeurs ont donc judicieusement déterminé trois conditions C1, C2 et C3 permettant d'obtenir l'inégalité (1) suivante :

$$VOL2/(\min(R_{FD}(D2),R_{FD}(D1))+(VOL1-VOL2)/R_{FD}(D1) < VOL2/R_{HD}(D2)+VOL1/R_{HD}(D1)$$

Pour ne pas sacrifier les performances de transmission des données D1 et D2 en mode full-duplex, les inventeurs ont astucieusement converti cette inégalité (1) en termes de SINR en utilisant la relation de Shannon donnant la capacité d'un canal de transmission en fonction du SINR du canal. De façon connue en soi, la capacité d'un canal désigne la limite supérieure notée ici Rmax du débit de données qui peut être transmis de manière fiable sur ce canal, c'est-à-dire avec une probabilité d'erreur qui tend vers zéro, en fonction du SINR reçu via ce canal. Plus particulièrement, les inventeurs ont utilisé ici la relation suivante :

$$Rmax=Wlog(1+SINR)$$

où W désigne la bande passante du canal considéré. On note que le log peut être indifféremment un logarithme en base 2, 10, ou un logarithme népérien selon l'unité considérée pour Rmax (ex. logarithme en base 2 pour une capacité exprimée en bit/s).

Les inventeurs ont utilisé cette limite supérieure donnée par Shannon pour exprimer les débits $R_{FD}(D2)$, $R_{FD}(D1)$ $R_{HD}(D2)$ et $R_{HD}(D1)$ impliqués dans l'inégalité (1). Plus précisément, ils ont considéré les hypothèses suivantes :

- le débit de transmission $R_{FD}(D2)$ a été approximé par :

$$R_{FD}(D2)=W2.\log(1+\mu_{FD,1,2})$$

où $\mu_{FD,1,2}$ désigne, comme indiqué précédemment, le rapport SINR reçu au niveau du véhicule V1 lorsque le véhicule V1, en mode full-duplex, reçoit les données D2 en provenance du véhicule V2 sur la fréquence f0 et émet simultanément sur cette même fréquence les données D1 vers la station de base BS. Le SINR $\mu_{FD,1,2}$ peut s'écrire sous la forme, avec les notations introduites précédemment :

$$\mu_{FD,1,2}= P_2^{(1)}/(I_{1,1}+I_{oth}+N_{th})$$

Dans cette expression, $P_2^{(1)}$ désigne la puissance des données D2 reçues par le véhicule V1, et $I_{1,1}$ est le niveau d'auto-interférence atteint au niveau du véhicule V1 lorsque celui-ci fonctionne en mode full-duplex, autrement dit généré par le véhicule V1 lui-même. Ce niveau d'auto-interférence correspond au niveau d'interférence résiduelle après que le véhicule V1 a éliminé l'interférence entachant les données D2 transmises par le véhicule V2. Il est décrit par exemple dans le document de T.Huusari et al. intitulé « Wideband Self-Adaptive RF Cancellation Circuit for Full-Duplex Radio : Operating Principle and Measurements », IEEE Vehicular Technology Conference, Mars 2015, et peut s'exprimer sous la forme du produit d'un facteur dit d'auto-interférence β du véhicule V1 par la puissance d'émission $P_1$ utilisée par le véhicule V1 pour émettre les données D1 vers la station de base BS (soit $I_{1,1}= \beta.P_1$) ;

- le débit de transmission $R_{HD}(D1)$ a été approximé par :

$$R_{HD}(D1)=W1.\log(1+\mu_{HD,BS,1})$$

où $\mu_{HD,BS,1}$ est, comme indiqué précédemment, le rapport SINR reçu par la station de base BS lorsque le véhicule V1, en mode half-duplex, émet les données D1 vers la station de base BS. Le SINR $\mu_{HD,BS,1}$ peut s'écrire sous la forme, avec les notations introduites précédemment :

$$\mu_{HD,BS,1}= P_1^{(BS)}/(I_{oth}+N_{th})$$

où $P_1^{(BS)}$ désigne la puissance des données D1 reçues par la station de base BS en provenance du véhicule V1;
- le débit de transmission $R_{HD}(D2)$ a été approximé par :

$$R_{HD}(D2)=W2.\log(1+\mu_{HD,1,2})$$

où $\mu_{HD,1,2}$ est, comme indiqué précédemment, le rapport SINR reçu au niveau du véhicule V1 lorsque le véhicule V1, en mode half-duplex, reçoit les données D2 du véhicule V2. Pour exprimer le SINR $\mu_{HD,1,2}$ tout en tenant compte des interférences susceptibles d'être générées sur le réseau NW, les inventeurs ont considéré que selon une hypothèse réaliste, couramment mise en oeuvre, la station de base BS ne peut, à un instant donné et sur une ressource radio donnée, recevoir des données que d'au plus un équipement utilisateur connecté au réseau NW. Le véhicule V1 fonctionnant en mode half-duplex et recevant les données D2 sur la fréquence f0, il n'émet donc pas simultanément vers la station de base BS. Un autre équipement utilisateur connecté au réseau NW (à savoir l'équipement utilisateur U ici) est donc susceptible d'émettre simultanément des données (les données D) vers la station de base BS sur la fréquence f0 lorsque le véhicule V2 émet les données D2 vers le véhicule V1. Cet équipement utilisateur U génère via l'émission de ses données D vers la station de base BS une interférence notée $I_{1,U}$ sur les données D2 reçues par le véhicule V1. Au vu de ces remarques, le SINR $\mu_{HD,1,2}$ peut alors être écrit sous la forme :

$$\mu_{HD,1,2}= P_2^{(1)}/(I_{1,U}+I_{oth}+N_{th}).$$

Pour obtenir les conditions C1 à C3, les inventeurs ont fait l'hypothèse que le débit de transmission en mode full-duplex entre les véhicules V1 et V2 est inférieur au débit de transmission en mode full-duplex sur le réseau NW entre le véhicule V1 et la station de base BS, soit :

$$R_{FD}(D2)<R_{FD}(D1)$$

On note que cette hypothèse est en pratique le plus souvent vérifiée dans le contexte de la figure 2 où un véhicule V2 émet des données vers un véhicule V1 pour que celui-ci les émette à son tour vers la station de base BS, dans leur version originale ou sous une forme modifiée, en les complétant éventuellement avec d'autres données.
Dans ce cas, l'inégalité (1) s'écrit sous la forme :

$$VOL2/R_{FD}(D2)+(VOL1-VOL2)/R_{FD}(D1) < VOL2/R_{HD}(D2)+VOL1/R_{HD}(D1)$$

On peut montrer par ailleurs, en utilisant la relation de Shannon, que $R_{FD}(D1)<R_{HD}(D1)$, en raison des interférences générées en mode full-duplex au niveau de la station de base BS qui sont plus importantes que les interférences générées en mode half-duplex. Par conséquent, l'inégalité ci-dessus peut s'écrire :

$$VOL2/R_{FD}(D2)< VOL2/R_{HD}(D2)+VOL2/R_{HD}(D1)$$

En reportant les expressions des débits $R_{FD}(D2)$, $R_{HD}(D2)$, $R_{HD}(D1)$ fournies précédemment, on obtient l'inégalité (2) suivante :

$$1/[W2.\log(1+\mu_{FD,1,2})] < 1/[W2.\log(1+\mu_{HD,1,2})]+1/[W1.\log(1+\mu_{HD,BS,1})]$$

soit

$$1/\log(1+\mu_{FD,1,2}) < 1/\log(1+\mu_{HD,1,2})+W2/[W1.\log(1+\mu_{HD,BS,1}))] \quad (2)$$

Les inventeurs ont noté que si $\mu_{FD,1,2} > \mu_{HD,1,2}$, l'inégalité (2) est toujours vérifiée. Autrement dit, en reportant dans cette condition, les expressions de $\mu_{HD,1,2}$ et de $\mu_{FD,1,2}$ dérivées précédemment, on obtient que l'inégalité (2) est toujours vérifiée si :

$$P_2^{(1)}/(I_{1,1}+I_{oth}+N_{th}) > P_2^{(1)}/(I_{1,U}+I_{oth}+N_{th})$$

soit lorsque la condition C1 suivante est vérifiée :

$$I_{1,1}= \beta.P_1 < I_{1,U}$$

qui peut s'écrire de manière équivalente sous la forme (C1') suivante :

$$\mu_{FD,1,1} < \mu_{HD,1,U}/(1- \mu_{HD,1,U})$$

avec

$$\mu_{FD,1,1}= I_{1,1}/(I_{oth}+N_{th}) \text{ et } \mu_{HD,1,U} = I_{1,U}/(I_{1,U}+I_{oth}+N_{th})$$

On note que la condition référencée par C1' est une condition équivalente à la condition C1 (i.e. C1 est vérifiée si et seulement si C1' est vérifiée). Au sens de l'invention, tester une condition ou déterminer si une condition est vérifiée inclut tester les termes exacts de la condition, ou tester une condition équivalente. En l'occurrence ici, pour déterminer si la condition C1 est vérifiée, on peut estimer et comparer les termes $I_{1,1}$ et $I_{1,U}$ mais on peut également, en variante, estimer et comparer les termes $\mu_{FD,1,1}$ et $\mu_{HD,1,U}/(1- \mu_{HD,1,U})$, ou les termes d'une autre relation équivalente.

Pour obtenir la condition C2, les inventeurs se sont intéressés au cas où, bien que la condition C1 ou de manière équivalente C1' ne soit pas vérifiée, l'inégalité (2) reste valide, autrement dit le temps de transmission en full-duplex reste inférieur au temps de transmission en half-duplex.

On peut montrer aisément que :

$$\mu_{HD,1,2}= \mu_0(1- \mu_{HD,1,U})$$

avec $\mu_0=P_2^{(1)}/(I_{oth}+N_{th})$ et :

$$\mu_{FD,1,2}= \mu_0/(1+\mu_{FD,1,1})$$

Si C1 n'est pas vérifiée, alors comme mentionné ci-avant C1' n'est pas vérifiée ; on a donc :

$$\mu_{FD,1,1} > \mu_{HD,1,U}/(1- \mu_{HD,1,U})$$

et ainsi :

$$\mu_{FD,1,2} < \mu_{HD,1,2}$$

L'inégalité (2) reste valable si, en posant :

$$\varepsilon=1/\log(1+\mu_{FD,1,2}) - 1/\log(1+\mu_{HD,1,2})$$

avec $\varepsilon>0$, on s'assure que la condition C2 suivante est vérifiée :

$$(W1/W2).\log(1+\mu_{HD,BS,1}) < 1/\varepsilon$$

Enfin, l'inégalité (2) peut également s'écrire sous la forme :

$$1/\log(1+ \mu_0/(1+\mu_{FD,1,1})) < 1/\log(1+ \mu_0(1- \mu_{HD,1,U}))+W2/[W1.\log(1+\mu_{HD,BS,1}))]$$

En posant :

$$B=1/\log(1+ \mu_0(1- \mu_{HD,1,U}))$$

et

$$C= W2/[W1.\log(1+\mu_{HD,BS,1}))]$$

l'inégalité (2) s'écrit :

$$1/\log(1+ \mu_0/(1+\mu_{FD,1,1}))<B+C$$

Il en découle que l'inégalité (2) est vérifiée si la condition C3 suivante est vérifiée :

$$\mu_{FD,1,1} < \mu_0/[\exp(1/(B+C))-1]-1$$

On note que les quantités (SINR, puissances, interférences, etc.) présentes dans les conditions C1 à C3 peuvent varier avec le temps, et en particulier avec la vitesse des équipements utilisateurs considérés (véhicules V1 et V2 et/ou équipement utilisateur U). Par souci de simplification des notations, on omet dans les formules décrites ici l'indexation par rapport au temps.

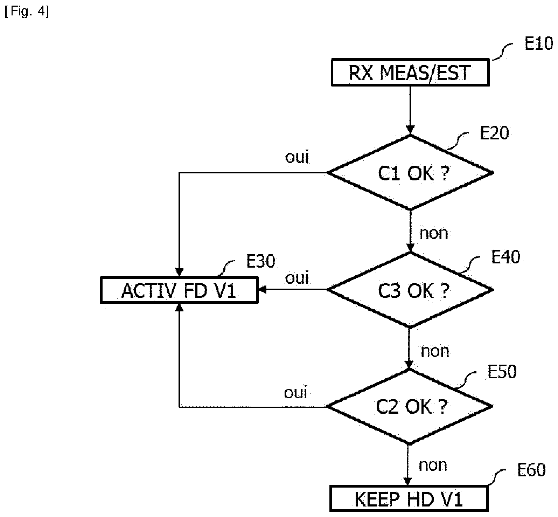

Nous allons maintenant décrire comment ces conditions C1 à C3 sont considérées par le contrôleur CTRL, dans un mode particulier de réalisation. La **figure 4** représente les principales étapes du procédé de contrôle mises en oeuvre par le contrôleur CTRL, dans ce mode particulier de réalisation, pour décider quel mode de transmission de données doit utiliser le véhicule V1 pour recevoir les données D2 du véhicule V2 et émettre les données D1 vers la station de base BS (ou inversement).

On suppose que les véhicules V1 et V2 se sont préalablement appairés pour pouvoir établir une communication pair-à-pair. Aucune limitation n'est attachée à l'interface de communication sans fil utilisée par les véhicules V1 et V2 pour établir cette communication : il peut s'agir par exemple d'une interface de communication s'appuyant sur un système de transmission de type OFDMA (pour Orthogonal Frequency-Division Multiple Access) telle qu'une interface de communication LTE (Long Term Evolution).

Un tel appairage entre les véhicules V1 et V2 peut être effectué par exemple comme décrit dans le document de J.M.Kelif et al. intitulé « Meeting Energy-Efficient and QoS Requirements of 5G using D2D communications », 18 décembre 2017 (https://arxiv.ora/abs/1712.06461). Le véhicule V1 est par ailleurs connecté à la station de base BS du réseau NW. On suppose que le véhicule V1 est alors configuré pour communiquer avec le véhicule V2 et avec la station de base en mode half-duplex.

Suite à cet appairage, le véhicule V1 effectue diverses mesures, de façon connue en soi, en exploitant par exemple des signaux pilotes prédéfinis émis via le réseau NW par les autres équipements utilisateurs connectés au réseau NW et notamment à la station de base BS, ainsi que par le véhicule V2.

Il mesure notamment la puissance $P_2^{(1)}$ reçue du véhicule V2, mais également la puissance reçue de la part d'autres dispositifs de communication « interférents » utilisant simultanément la même ressource radio que le véhicule V2 (à savoir ici, la même fréquence f0) pour communiquer avec le véhicule V1. Il peut s'agir par exemple d'autres véhicules communiquant pair-à-pair et utilisant la fréquence f0 simultanément aux véhicules V1 et V2. Cette puissance constitue l'interférence globale $I_G$ subie par le véhicule V1 en mode de transmission half-duplex. Elle comprend en particulier l'interférence $I_{1,U}$ générée par l'équipement utilisateur U lors de ses communications avec la station de base BS et l'interférence $I_{oth}$ générée par tous les dispositifs de communication autres que l'équipement utilisateur U (quatrième(s) dispositif(s) de communication au sens de l'invention). On note que c'est la même interférence $I_{oth}$ qui affecte le véhicule V1 lorsque celui-ci communique en mode full-duplex (à laquelle se combine alors l'auto-interférence $I_{1,1}$ générée par le véhicule V1 lui-même).

On note aussi que les mesures réalisées par le véhicule V1 peuvent être mises en oeuvre à divers instants, par exemple de façon périodique ou sur détection d'événements particuliers, de sorte à évaluer de façon continue ou quasi-continue les conditions dans lesquelles se trouve le véhicule V1 et pouvoir réapprécier à divers instants la pertinence de le basculer ou non sur un mode de transmission full duplex.

Le véhicule V1 estime par ailleurs le niveau d'auto-interférence $I_{1,1}$ qu'il génère lorsqu'il fonctionne en mode de transmission full-duplex. Comme indiqué précédemment, ce niveau d'autointerférence correspond au niveau d'interférence résiduelle après que le véhicule V1 a éliminé l'interférence entachant les données transmises par le véhicule V2. Il est décrit par exemple dans le document de T.Huusari et al. intitulé « Wideband Self-Adaptive RF Cancellation Circuit for Full-Duplex Radio : Operating Principle and Measurements », IEEE Vehicular Technology Conference, Mars 2015. Ce niveau d'auto-interférence $I_{1,1}$ peut s'exprimer de façon équivalente sous la forme du produit d'un facteur dit d'auto-interférence $\beta$ du véhicule V1 par la puissance d'émission $P_1$ utilisée par le véhicule V1 pour émettre des données vers la station de base BS, soit $I_{1,1} = \beta.P_1$. Ce facteur d'autointerférence $\beta$ est un paramètre fixe, qui peut être évalué par ou pour le véhicule V1 préalablement.

Les différentes mesures et estimations réalisées par le véhicule V1 sont transmises par celui-ci au contrôleur CTRL (étape E10), via son interface de communication sur le réseau NW. On note que le véhicule V1 peut transmettre indifféremment au contrôleur CTRL une estimation de son niveau d'auto-interférence $I_{1,1}$ ou les paramètres individuels $\beta$ et $P_1$.

Dans le mode de réalisation décrit ici, à partir des mesures et estimations reçues du véhicule V1, le contrôleur CTRL, via son module de détermination 7, détermine si la condition C1 est vérifiée (étape test E20) c'est-à-dire si :

$$I_{1,1} < I_{1,U}$$

où $I_{1,U}$ est le niveau d'interférence généré au niveau du véhicule V1, lorsque celui-ci fonctionne en mode half-duplex et reçoit des données du véhicule V2 sur la ressource radio f0, par un autre équipement utilisateur connecté au réseau NW et communiquant simultanément sur la ressource f0 avec la station de base BS, à savoir ici l'équipement utilisateur U.

Pour estimer l'interférence $I_{1,U}$, le contrôleur CTRL utilise, dans le mode de réalisation décrit, l'approximation suivante :

$$I_{1,U} = K.P_u.(DIST_{1,U})^{-n}$$

où K désigne un facteur de propagation, $P_u$ la puissance d'émission utilisée par l'équipement utilisateur U pour émettre des données vers la station de base BS, $DIST_{1,U}$ la distance séparant le véhicule V1 de l'équipement utilisateur u (à l'instant considéré) et n désigne un exposant d'affaiblissement de trajet (ou « pathloss » en anglais). Cette approximation modélise la propagation des ondes en espace libre et est connue de l'homme du métier.

On note que la distance $DIST_{1,U}$ peut être estimée par le contrôleur CTRL à partir des positions de l'équipement utilisateur U et du véhicule V1, ces positions pouvant être remontées par l'équipement utilisateur U (avec sa puissance d'émission $P_u$) et par le véhicule V1. Ceux-ci peuvent à cet effet être dotés de récepteurs GPS qui leur permettent d'obtenir leurs positions respectives et transmettre ces positions au contrôleur CTRL via le réseau NW.

En variante, la position de l'équipement utilisateur U peut être remontée au contrôleur CTRL par la station de base BS en même temps que la puissance d'émission $P_u$. Il en est de même de la position du véhicule V1.

Ainsi, le module de détermination 7 du contrôleur CTRL détermine ici que la condition C1 est vérifiée s'il détermine que :

$$DIST_{1,U} < [K.P_u/I_{1,1}]^{1/n}$$

Si la condition C1 est vérifiée (réponse oui à l'étape E20), le module d'activation 8 du contrôleur CTRL active le mode de transmission full-duplex au niveau du véhicule V1 (étape E30). A cet effet, il envoie un message au véhicule V1, par exemple via le réseau NW. Suite à cette activation, le véhicule V1 peut recevoir les données D2 du véhicule V2 en même temps et sur la même ressource radio (même fréquence f0 par exemple) qu'il émet ses données D1 vers la station de base BS.

Si la condition C1 n'est pas vérifiée (réponse non à l'étape E20), dans le mode de réalisation décrit ici, le contrôleur CTRL, via son module de détermination 7, teste la condition C3 (étape test E40), c'est-à-dire si :

$$\mu_{FD,1,1} < \mu_0/[\exp(1/(B+C)-1]-1$$

avec :

$$\mu_{FD,1,1} = I_{1,1}/(I_{oth}+N_{th})$$

$$B = 1/\log(1+\mu_0(1-\mu_{HD,1,U}))$$

$$C = W2/[W1.\log(1+\mu_{HD,BS,1}))]$$

$$\mu_0 = P_2^{(1)}/(I_{oth}+N_{th})$$

$$\mu_{HD,1,U} = I_{1,U}/(I_{1,U}+I_{oth}+N_{th})$$

Pour évaluer les facteurs B, C et le ratio $\mu_0$, le contrôleur CTRL utilise les mesures et les estimations remontées par le véhicule V1. En outre, s'il n'a pas estimé directement le niveau d'interférence $I_{1,U}$ durant l'étape E20, il dispose de toutes les informations nécessaires pour le faire. A partir de l'estimation du niveau d'interférence $I_{1,U}$ et du niveau d'interférence globale $I_G = I_{1,U} + I_{oth} + N_{th}$ fournie par le véhicule V1, il peut en déduire $I_{oth} + N_{th}$ puis le ratio $\mu_0$. Le contrôleur CTRL peut également estimer le SINR $\mu_{HD,BS,1}$ à partir de la puissance $P_1^{(BS)}$ qui peut être remontée par la station de base BS.

Si le contrôleur CTRL détermine que la condition C3 est vérifiée (réponse oui à l'étape E40), le module d'activation 8 du contrôleur CTRL active le mode de transmission full-duplex au niveau du véhicule V1, comme décrit précédemment (étape E30).

Si le contrôleur CTRL détermine que la condition C3 n'est pas vérifiée (réponse non à l'étape E40), dans le mode de réalisation décrit ici, le contrôleur CTRL, via son module de détermination 7, teste la condition C2 (i.e. vérifie si elle est satisfaite) (étape test E50), c'est-à-dire si :

$$(W1/W2).\log(1+\mu_{HD,BS,1}) < 1/\varepsilon \text{ avec } \varepsilon = 1/\log(1+\mu_{FD,1,2}) - 1/\log(1+\mu_{HD,1,2})$$

Pour évaluer les SINR $\mu_{HD,BS,1}$, $\mu_{FD,1,2}$ et $\mu_{HD,1,2}$, le contrôleur CTRL utilise les mesures et les estimations remontées par le véhicule V1. En outre, il peut utiliser les relations suivantes, introduites précédemment :

$$\mu_{HD,BS,1} = P_1^{(BS)}/(I_{oth} + N_{th})$$

$$\mu_{HD,1,2} = \mu_0(1 - \mu_{HD,1,U}) \text{ et } \mu_{FD,1,2} = \mu_0/(1 + \mu_{FD,1,1})$$

et se servir le cas échéant des quantités qu'il a déjà estimées lors des étapes E20 et E40.

Si la condition C2 est vérifiée (réponse oui à l'étape E50), le module d'activation 8 du contrôleur CTRL active le mode de transmission full-duplex au niveau du véhicule V1, comme décrit précédemment (étape E30).

Sinon, le contrôleur CTRL ne modifie pas la configuration du véhicule V1 et le laisse utiliser le mode half-duplex pour recevoir les données D2 du véhicule D2 et émettre les données D1 vers la station de base BS (étape E60).

Les étapes E10 à E60 sont préférentiellement réitérées à divers instants pour déterminer si un changement de configuration du véhicule V1 doit être envisagé. On note que pour estimer les différentes quantités impliquées dans les conditions C1 à C3, le contrôleur CTRL peut soit utiliser des mesures remontées à différents instants par le véhicule V1, soit déduire des mesures remontées à un instant t0 la valeur de certaines de ces quantités à un instant t quelconque en tenant compte de la vitesse de déplacement du véhicule V1. C'est le cas par exemple du SINR $\mu_{HD,1,U}$ qui peut être estimé à un instant t de la façon suivante :

$$\mu_{HD,1,U}(t) = \mu_{HD,1,U}(t0) + (t-t0).v_1.[d\mu_{HD,1,U}(t)/dDIST_{1,U}]$$

où $V_1$ désigne la vitesse du véhicule V1. On note qu'une approche similaire peut être adoptée pour estimer de manière générale tous les SINR et/ou les interférences variant en fonction du temps et plus particulièrement de la position des véhicules V1 et/ou V2.

Dans le mode de réalisation décrit ici, le contrôleur CTRL teste successivement les conditions C1, C3 et C2. On peut envisager de tester seulement une partie des conditions C1 à C3, et/ou dans un ordre différent.

Ainsi, à titre d'exemple, seule la condition C1 ou seule la condition C2 peut être testée.

Selon un autre exemple, la condition C1 peut être testée suivie de la condition C3 si la condition C1 n'est pas vérifiée.

D'autres configurations de tests peuvent être envisagés, ainsi que d'autres conditions, notamment en sus des conditions C1 et C2.

Comme mentionné précédemment, les conditions C1 à C3 ont été dérivées par les inventeurs en s'appuyant sur l'hypothèse que le débit $R_{FD}(D2)$ de communication pair-à-pair est inférieur (ou égal) au débit $R_{FD}(D1)$ de communication sur le réseau NW, cette hypothèse étant en pratique le plus souvent vérifiée. On note que bien que les conditions C1 à C3 ont été dérivées en considérant que VOL1≥VOL2, on peut aisément démontré qu'elles sont toujours valables dans le cas $R_{FD}(D2) < R_{FD}(D1)$ pour VOL2>VOL1.

Dans un autre mode de réalisation de l'invention, on peut envisager que le procédé de contrôle comprennent la vérification comme décrit précédemment de tout ou partie des conditions C1 à C3 lorsque le contrôleur CTRL détermine ou est informé que le débit $R_{FD}(D2)$ est inférieur au débit $R_{FD}(D1)$, et la vérification d'une ou de plusieurs conditions alternatives, telles que les conditions C4 ou C5 décrites ci-après, lorsque le débit $R_{FD}(D2)$ est supérieur au débit $R_{FD}(D1)$. Lorsque le débit $R_{FD}(D2)$ est égal au débit $R_{FD}(D1)$, le contrôleur CTRL peut tester soit les conditions C1 à C3, soit les conditions C4 ou C5.

Dans le cas d'application privilégié où les données D1 comprennent les données D2 et éventuellement d'autres données en supplément (i.e. VOL1≥VOL2), l'inégalité (1) devient :

$$VOL2/R_{FD}(D1)+(VOL1-VOL2)/R_{FD}(D1) < VOL2/R_{HD}(D2)+VOL1/R_{HD}(D1)$$

soit

$$VOL1/R_{FD}(D1) < VOL2/R_{HD}(D2)+VOL1/R_{HD}(D1)$$

qui peut encore s'écrire en reportant dans l'inégalité ci-dessus les expressions de $R_{FD}(D1)$, $R_{HD}(D2)$ et $R_{HD}(D1)$ :

$$1/\log(1+\mu_{FD,BS,1}) < \alpha/\log(1+\mu_{HD,1,2})+1/\log(1+\mu_{HD,BS,1})$$

avec $\alpha=(VOL2/VOL1).(W1/W2)$ et où $\mu_{FD,BS,1}$ désigne le SINR reçu par la station de base BS lorsque le véhicule V1, en mode full-duplex, émet les données D1 vers la station de base BS tout en recevant les données D2 sur la même ressource radio simultanément du véhicule V2. On note que $\alpha=1$ dans le cas d'application privilégiée où les données D1 correspondent aux données D2 (et donc VOL2=VOL1) et W1=W2.

Le SINR $\mu_{FD,BS,1}$ est approximé par :

$$\mu_{FD,BS,1}=P_1^{(BS)}/(I_{oth}+N_{th}+I_{2,BS})$$

où $P_1^{(BS)}$ désigne la puissance reçue au niveau de la station de base BS des données D1 transmises par le véhicule V1 en mode full-duplex, et $I_{2,BS}$ le niveau de l'interférence générée au niveau de la station de base BS par la transmission simultanée des données D2 par le véhicule V2 au véhicule V1 fonctionnant en mode full-duplex. On note que $\mu_{FD,BS,1}$ est toujours inférieur à $\mu_{HD,BS,1}$.

En posant :

$$A= \alpha/\log(1+\mu_{HD,1,2})+1/\log(1+\mu_{HD,BS,1})$$

on obtient la condition :

$$1/\log(1+\mu_{FD,BS,1}) < A$$

équivalente à la condition C4 suivante :

$$\mu_{FD,BS,1} > \exp(1/A)-1$$

Les informations nécessaires à l'évaluation de la condition C4 peuvent être obtenues par le contrôleur de la station de base BS qui peut mesurer les niveaux de puissance et d'interférences reçus à partir de signaux pilotes émis par le véhicule V1 et/ou par le véhicule V2.

On note qu'une condition C5 peut également être envisagée lorsque VOL2>VOL1.

Un temps de transmission en mode full-duplex inférieur au temps de transmission en mode half-duplex se traduit par :

$$VOL2/R_{FD}(D2) < VOL2/R_{HD}(D2)+VOL1/R_{HD}(D1)$$

ou par la condition C5 suivante obtenue en reportant dans l'inégalité ci-dessus les expressions de $R_{FD}(D2)$, $R_{HD}(D2)$, $R_{HD}(D1)$ :

$$1/[W2.\log(1+\mu_{FD,1,2})] < 1/[W2.\log(1+\mu_{HD,1,2})]+(VOL1.W2)/[VOL2.W1.\log(1+\mu_{HD,BS,1})]$$

L'invention permet ainsi avantageusement de bénéficier des avantages du mode de transmission full-duplex pour permettre à un véhicule V2 d'émettre des données vers une station de base BS via un autre véhicule V1 sans pour autant sacrifier la qualité des transmissions. Elle a une application privilégiée mais non limitative dans le contexte des réseaux 4G et des réseaux 5G qui offrent la possibilité à des équipements utilisateurs très variés, comme des véhicules, d'être connectés et de bénéficier de forts débits.

**Revendications**

1. Procédé de contrôle, par un contrôleur (CTRL), d'un mode de transmission de données destiné à être utilisé par un premier véhicule (V1) pour communiquer avec un deuxième véhicule (V2) et avec une station de base (BS) d'un réseau de communications sans fil, ce procédé comprenant :

   - une première étape de détermination (E20) si une condition est vérifiée, ladite condition étant :

   une condition C1 : $I_{1,1} < I_{1,U}$
   ou une condition C2 : $(W1/W2).\log(1+\mu_{HD,BS,1}) < 1/\varepsilon$
   avec $\varepsilon = 1/\log(1+\mu_{FD,1,2}) - 1/\log(1+\mu_{HD,1,2})$, où :
   W1 et W2 désignent respectivement des bandes passantes des canaux de transmission entre le premier véhicule et la station de base, et entre le deuxième véhicule et le premier véhicule ;
   $I_{1,1}$ est un niveau d'auto-interférence atteint au niveau du premier véhicule lorsqu'il fonctionne en full-duplex et émet des données vers la station de base sur une ressource radio sur laquelle simultanément il reçoit des données du deuxième véhicule ;
   $I_{1,U}$ est un niveau d'interférence généré au niveau du premier véhicule par un troisième dispositif de communication, lorsque le troisième dispositif de communication émet des données vers la station de base sur une ressource radio sur laquelle simultanément le premier véhicule, en mode half-duplex reçoit des données du deuxième véhicule ;
   $\mu_{HD,BS,1}$ est un rapport signal-sur-interférence-plus-bruit SINR, reçu par la station de base lorsque le premier véhicule, en mode half-duplex, émet des données vers la station de base ;
   $\mu_{FD,1,2}$ est un rapport SINR reçu au niveau du premier véhicule lorsque le premier véhicule, en mode full-duplex, reçoit des données en provenance du deuxième véhicule sur une ressource radio sur laquelle simultanément le premier véhicule émet des données vers la station de base ; et
   $\mu_{HD,1,2}$ est un rapport SINR reçu au niveau du premier véhicule lorsque le premier véhicule, en mode half-duplex, reçoit des données du deuxième véhicule ;

   - une étape d'activation (E30) d'un mode de transmission de données full-duplex au niveau du premier véhicule pour communiquer avec le deuxième véhicule et avec la station de base si ladite condition est vérifiée.

2. Procédé de contrôle selon la revendication 1 dans lequel la première étape de détermination consiste à déterminer si la condition C1 est vérifiée et comprend une comparaison :

   - d'une distance entre le premier véhicule et le troisième dispositif ; avec
   - un ratio, élevé à la puissance n où n désigne l'inverse d'un exposant d'affaiblissement de trajet :

   d'un produit d'un facteur de propagation par une puissance d'émission du troisième dispositif lorsque ledit troisième dispositif émet des données vers la station de base sur une ressource radio sur laquelle simultanément le premier véhicule, en mode half-duplex reçoit des données du deuxième véhicule, et du niveau d'auto-interférence $I_{1,1}$ ;

   la condition C1 étant vérifiée si la distance est inférieure au ratio.

3. Procédé de contrôle selon la revendication 2 comprenant en outre :

   - une étape de réception, en provenance du premier véhicule, du niveau d'auto-interférence $I_{1,1}$, ou d'un facteur d'auto-interférence du premier véhicule et d'une puissance d'émission du premier véhicule ; et/ou

- une étape de réception, en provenance du troisième dispositif de communication ou de ladite station de base, de la puissance d'émission du troisième dispositif de communication.

4. Procédé de contrôle selon la revendication 2 ou 3 dans lequel la distance entre le premier véhicule et le troisième dispositif de communication est déterminée à partir d'une position du premier véhicule mesurée par le premier véhicule et/ou d'une position du troisième dispositif de communication mesurée par le troisième dispositif.

5. Procédé de contrôle selon l'une quelconque des revendications 1 à 4 dans lequel la première étape de détermination consiste à déterminer si la condition C1 est vérifiée, et si la condition C1 n'est pas vérifiée, le procédé comprend en outre :

- une deuxième étape de détermination si la condition C2 est vérifiée ; et
- une étape d'activation du mode full-duplex de transmission de données au niveau du premier véhicule si la condition C2 est vérifiée.

6. Procédé de contrôle selon l'une quelconque des revendications 1 à 5 dans lequel la première étape de détermination consiste à déterminer si la condition C1 est vérifiée, et si la condition C1 n'est pas vérifiée, le procédé comprend en outre :

- une troisième étape de détermination (E40) si une condition C3 :

$$\mu_{FD,1,1} < \mu_0/[\exp(1/(B+C)-1]-1$$

est vérifiée avec :

$$\mu_{FD,1,1} = I_{1,1}/(I_{oth}+N_{th})$$

$$B = 1/\log(1+\mu_0(1-\mu_{HD,1,U}))$$

$$C = W2/[W1.\log(1+\mu_{HD,BS,1}))]$$

$$\mu_0 = P_2^{(1)}/(I_{oth}+N_{th})$$

$$\mu_{HD,1,U} = I_{1,U}/(I_{1,U}+I_{oth}+N_{th})$$

où :

$P_2^{(1)}$ est une puissance des données reçues par le premier véhicule en provenance du deuxième véhicule ;
$I_{oth}$ est un niveau d'interférence généré au niveau du premier véhicule par au moins un quatrième dispositif de communication émettant des données sur une ressource radio sur laquelle simultanément, le premier véhicule, en mode full-duplex, émet des données vers la station de base et reçoit des données du deuxième véhicule ou sur laquelle simultanément le premier véhicule, en mode half-duplex, reçoit des données du deuxième véhicule ; et
$N_{th}$ est un niveau de bruit reçu par le premier véhicule ;

- une étape d'activation du mode full-duplex de transmission de données au niveau du premier véhicule si la condition C3 est vérifiée.

7. Procédé de contrôle selon la revendication 6 comprenant en outre, si la condition C3 n'est pas vérifiée :

- une quatrième étape de détermination (E50) si la condition C2 est vérifiée ; et
- une étape d'activation (E30) du mode full-duplex de transmission de données au niveau du premier véhicule si la condition C2 est vérifiée.

8. Procédé de contrôle selon l'une quelconque des revendications 1 à 7 dans lequel la première, et le cas échéant, la deuxième, la troisième et la quatrième étape de détermination sont reproduites à différents instants.

9. Procédé de contrôle selon l'une quelconque des revendications 1 à 8 dans lequel la première, et le cas échéant, la deuxième, la troisième et la quatrième étape de détermination sont mises en œuvre si un débit de transmission des données entre le deuxième véhicule et le premier véhicule est inférieur ou égal à un débit de transmission des données entre le premier véhicule et la station de base.

10. Procédé de contrôle selon la revendication 9 comprenant en outre, lorsque le débit de transmission des données entre le deuxième véhicule et le premier véhicule est supérieur au débit de transmission des données entre le premier véhicule et la station de base :

    - une cinquième étape de détermination si une condition est vérifiée, ladite condition étant choisie parmi :

    une condition C4 : $\mu_{FD,BS,1} > \exp(1/A)-1$
    avec $A = \alpha/\log(1+\mu_{HD,1,2}) + 1/\log(1+\mu_{HD,BS,1})$ et $\alpha = (VOL2/VOL1).(W1/W2)$ où $\mu_{FD,BS,1}$ désigne le SINR reçu par la station de base lorsque le premier véhicule, en mode full-duplex, émet un volume VOL1 de données vers la station de base BS et reçoit simultanément sur la même ressource radio un volume VOL2 de données du deuxième véhicule, et
    une condition C5 :

$$1/[W2.\log(1+\mu_{FD,1,2})] < 1/[W2.\log(1+\mu_{HD,1,2})] + (VOL1.W2)/[VOL2.W1.\log(1+\mu_{HD,BS,1})]$$

    - une étape d'activation du mode full-duplex de transmission de données au niveau du premier véhicule si la condition choisie parmi la condition C4 et la condition C5 est vérifiée.

11. Programme d'ordinateur comportant des instructions pour l'exécution d'un procédé de contrôle selon l'une quelconque des revendications 1 à 10, lorsque ledit programme est exécuté par un ordinateur.

12. Support d'enregistrement lisible par un ordinateur sur lequel est enregistré un programme d'ordinateur (Prog) selon la revendication 11.

13. Contrôleur (CTRL) configuré pour contrôler un mode de transmission de données utilisé par un premier véhicule pour communiquer avec un deuxième véhicule et avec une station de base d'un réseau de communications sans fil, ledit contrôleur comprenant :

    - un module de détermination (7) configuré pour déterminer si une condition est vérifiée, ladite condition étant :

    une condition C1 : $I_{1,1} < I_{1,U}$ ; ou
    une condition C2 : $(W1/W2).\log(1+\mu_{HD,BS,1}) < 1/\varepsilon$
    avec $\varepsilon = 1/\log(1+\mu_{FD,1,2}) - 1/\log(1+\mu_{HD,1,2})$, où :
    W1 et W2 désignent respectivement des bandes passantes des canaux de transmission entre le premier véhicule et la station de base, et entre le deuxième véhicule et le premier véhicule ;
    $I_{1,1}$ est un niveau d'auto-interférence atteint au niveau du premier véhicule lorsqu'il fonctionne en full-duplex et émet des données vers la station de base sur une ressource radio sur laquelle simultanément il reçoit des données du deuxième véhicule ;
    $I_{1,U}$ est un niveau d'interférence généré au niveau du premier véhicule par un troisième dispositif de communication, lorsque le troisième dispositif de communication émet des données vers la station de base sur une ressource radio sur laquelle simultanément le premier véhicule, en mode half-duplex reçoit des données du deuxième véhicule ;
    $\mu_{HD,BS,1}$ est un rapport signal-sur-interférence-plus-bruit SINR, reçu par la station de base lorsque le premier véhicule, en mode half-duplex, émet des données vers la station de base ;
    $\mu_{FD,1,2}$ est un rapport SINR reçu au niveau du premier véhicule lorsque le premier véhicule, en mode full-duplex, reçoit des données en provenance du deuxième véhicule sur une ressource radio sur laquelle simultanément le premier véhicule émet des données vers la station de base ; et

$\mu_{HD,1,2}$ est un rapport SINR reçu au niveau du premier véhicule lorsque le premier véhicule, en mode half-duplex, reçoit des données du deuxième véhicule ;

- un module d'activation (8) configuré pour activer un mode full-duplex de transmission de données au niveau du premier véhicule pour communiquer avec le deuxième véhicule et avec la station de base si le module de détermination détermine que ladite condition prédéfinie est vérifiée.

**14.** Système de transmission (1) comprenant :

- au moins un premier véhicule (V1), un deuxième véhicule (V2) et une station de base (BS) d'un réseau de communications sans fil, le premier véhicule et le deuxième véhicule étant aptes à communiquer entre eux pair-à-pair et avec la station de base ; et
- un contrôleur (CTRL) selon la revendication 13, configuré pour contrôler un mode de transmission de données utilisé par le premier véhicule pour communiquer avec le deuxième véhicule et avec la station de base.

**15.** Système de transmission (1) selon la revendication 14 dans lequel le contrôleur est embarqué dans une station de base ou dans une entité de gestion centralisée du réseau de communications sans fil.

**Patentansprüche**

**1.** Verfahren zur Kontrolle, durch einen Controller (CTRL), eines Datenübertragungsmodus, der dazu bestimmt ist, von einem ersten Fahrzeug (V1) zur Kommunikation mit einem zweiten Fahrzeug (V2) und mit einer Basisstation (BS) eines drahtlosen Kommunikationsnetzwerks verwendet zu werden, wobei dieses Verfahren enthält:

- einen ersten Bestimmungsschritt (E20), ob eine Bedingung erfüllt ist, wobei die Bedingung ist:

eine Bedingung C1 : $I_{1,1} < I_{1,U}$ oder
eine Bedingung C2 : $(W1/W2) \cdot \log(1+\mu_{HD,BS,1}) < 1/\varepsilon$ mit $\varepsilon = 1/\log(1+\mu_{FD,1,2}) - 1/\log(1+\mu_{HD,1,2})$ , wobei:

W1 und W2 je Bandbreiten der Übertragungskanäle zwischen dem ersten Fahrzeug und der Basisstation und zwischen dem zweiten Fahrzeug und dem ersten Fahrzeug bezeichnen;
$I_{1,1}$ ein Selbstinterferenzbereich ist, der im Bereich des ersten Fahrzeugs erreicht wird, wenn es im Full-Duplex arbeitet und Daten an die Basisstation auf einer Funkressource sendet, auf der es gleichzeitig Daten vom zweiten Fahrzeug empfängt;
$I_{1,u}$ ein Interferenzbereich ist, der im Bereich des ersten Fahrzeugs von einer dritten Kommunikationsvorrichtung erzeugt wird, wenn die dritte Kommunikationsvorrichtung Daten an die Basisstation auf einer Funkressource sendet, auf der gleichzeitig das erste Fahrzeug im Half-Duplex-Modus Daten vom zweiten Fahrzeug empfängt;
$\mu_{HD,BS,1}$ ein Signal-zu-Interferenz-plus-RauschVerhältnis, SINR, ist, das von der Basisstation empfangen wird, wenn das erste Fahrzeug im Half-Duplex-Modus Daten an die Basisstation sendet;
$\mu_{FD,1,2}$ ein SINR-Verhältnis ist, das im Bereich des ersten Fahrzeugs empfangen wird, wenn das erste Fahrzeug im Full-Duplex-Modus Daten vom zweiten Fahrzeug auf einer Funkressource empfängt, auf der das erste Fahrzeug gleichzeitig Daten an die Basisstation sendet; und
$\mu_{HD,1,2}$ ein SINR-Verhältnis ist, das im Bereich des ersten Fahrzeugs empfangen wird, wenn das erste Fahrzeug im Half-Duplex-Modus Daten vom zweiten Fahrzeug empfängt;

- einen Aktivierungsschritt (E30) eines Full-Duplex-Datenübertragungsmodus im Bereich des ersten Fahrzeugs, um mit dem zweiten Fahrzeug und mit der Basisstation zu kommunizieren, wenn die Bedingung erfüllt ist.

**2.** Kontrollverfahren nach Anspruch 1, wobei der erste Bestimmungsschritt darin besteht, zu bestimmen, ob die Bedingung C1 erfüllt ist, und einen Vergleich enthält:

- eines Abstands zwischen dem ersten Fahrzeug und der dritten Vorrichtung; mit
- einem Verhältnis, mit n potenziert, wobei n den Umkehrwert eines Funkfelddämpfungsexponenten bezeichnet:

eines Produkts aus einem Ausbreitungsfaktor und einer Sendeleistung der dritten Vorrichtung, wenn die dritte Vorrichtung Daten an die Basisstation auf einer Funkressource sendet, auf der das erste Fahrzeug gleichzeitig im Half-Duplex-Modus Daten vom zweiten Fahrzeug empfängt, und
des Selbstinterferenzbereichs $I_{1,1}$;

wobei die Bedingung C1 erfüllt ist, wenn der Abstand geringer ist als das Verhältnis.

3. Kontrollverfahren nach Anspruch 2, das außerdem enthält:

- einen Schritt des Empfangs, vom ersten Fahrzeug kommend, des Selbstinterferenzbereichs $I_{1,1}$, oder eines Selbstinterferenzfaktors des ersten Fahrzeugs und einer Sendeleistung des ersten Fahrzeugs; und/oder
- einen Schritt des Empfangs, von der dritten Kommunikationsvorrichtung oder von der Basisstation kommend, der Sendeleistung der dritten Kommunikationsvorrichtung.

4. Kontrollverfahren nach Anspruch 2 oder 3, wobei der Abstand zwischen dem ersten Fahrzeug und der dritten Kommunikationsvorrichtung ausgehend von einer Position des ersten Fahrzeugs gemessen vom ersten Fahrzeug und/oder einer Position der dritten Kommunikationsvorrichtung gemessen von der dritten Vorrichtung bestimmt wird.

5. Kontrollverfahren nach einem der Ansprüche 1 bis 4, wobei der erste Bestimmungsschritt darin besteht, zu bestimmen, ob die Bedingung C1 erfüllt ist, und wenn die Bedingung C1 nicht erfüllt ist, das Verfahren außerdem enthält:

- einen zweiten Bestimmungsschritt, wenn die Bedingung C2 erfüllt ist; und
- einen Aktivierungsschritt des Full-Duplex-Modus der Datenübertragung im Bereich des ersten Fahrzeugs, wenn die Bedingung C2 erfüllt ist.

6. Kontrollverfahren nach einem der Ansprüche 1 bis 5, wobei der erste Bestimmungsschritt darin besteht, zu bestimmen, ob die Bedingung C1 erfüllt ist, und wenn die Bedingung C1 nicht erfüllt ist, das Verfahren außerdem enthält:

- einen dritten Bestimmungsschritt (E40), wenn eine Bedingung C3:

$$\mu_{FD,1,1} \, < \, \mu_0 / [\exp(1/(B+C)-1]-1$$

erfüllt ist, mit:

$$\mu_{FD,1,1} = I_{1,1} / (I_{oth} + N_{th})$$

$$B = 1/\log1(1 + \mu_0(1 - \mu_{HD,1,U}))$$

$$C = W2 / [W1.\log(1 + \mu_{HD,BS,1}))]$$

$$\mu_0 = P_2^{(1)} / (I_{oth} + N_{th})$$

$$\mu_{HD,1,U} = I_{1,U} / (I_{1,U} + I_{oth} + N_{th})$$

wobei:

$P_2^{(1)}$ eine Leistung der vom zweiten Fahrzeug kommenden, vom ersten Fahrzeug empfangenen Daten ist;
$I_{oth}$ ein Interferenzbereich ist, der im Bereich des ersten Fahrzeugs von mindestens einer vierten Kommunikationsvorrichtung erzeugt wird, die Daten auf einer Funkressource sendet, auf der das erste Fahrzeug gleichzeitig im Full-Duplex-Modus Daten an die Basisstation sendet und Daten vom zweiten Fahrzeug empfängt, oder auf der das erste Fahrzeug gleichzeitig im Half-Duplex-Modus Daten vom zweiten Fahrzeug empfängt; und
$N_{th}$ ein vom ersten Fahrzeug empfangener Rauschpegel ist;

- einen Aktivierungsschritt des Full-Duplex-Modus der Datenübertragung im Bereich des ersten Fahrzeugs, wenn die Bedingung C3 erfüllt ist.

7. Kontrollverfahren nach Anspruch 6, das außerdem enthält, wenn die Bedingung C3 nicht erfüllt ist:

- einen vierten Bestimmungsschritt (E50), wenn die Bedingung C2 erfüllt ist; und
- einen Aktivierungsschritt (E30) des Full-Duplex-Modus der Datenübertragung im Bereich des ersten Fahrzeugs, wenn die Bedingung C2 erfüllt ist.

8. Kontrollverfahren nach einem der Ansprüche 1 bis 7, wobei der erste und ggf. der zweite, der dritte und der vierte Bestimmungsschritt zu verschiedenen Zeitpunkten reproduziert werden.

9. Kontrollverfahren nach einem der Ansprüche 1 bis 8, wobei der erste und ggf. der zweite, der dritte und der vierte Bestimmungsschritt durchgeführt werden, wenn ein Übertragungsdurchsatz der Daten zwischen dem zweiten Fahrzeug und dem ersten Fahrzeug geringer als ein oder gleich einem Übertragungsdurchsatz der Daten zwischen dem ersten Fahrzeug und der Basisstation ist.

10. Kontrollverfahren nach Anspruch 9, das außerdem, wenn der Übertragungsdurchsatz der Daten zwischen dem zweiten Fahrzeug und dem ersten Fahrzeug höher ist als der Übertragungsdurchsatz der Daten zwischen dem ersten Fahrzeug und der Basisstation, enthält:

- einen fünften Bestimmungsschritt, ob eine Bedingung erfüllt ist, wobei die Bedingung ausgewählt wird unter:

einer Bedingung C4: $\mu_{FD,BS,1} > \exp(1/A)-1$
mit $A=\alpha/\log(1+\mu_{HD,1,2}) +1/\log(1+\mu_{HD,BS,1})$ und $\alpha=(VOL2/VOL1).(W1/W2)$ wobei $\mu_{FD,BS,1}$ das von der Basisstation empfangene SINR ist, wenn das Fahrzeug im Full-Duplex-Modus ein Volumen VOL1 von Daten an die Basisstation BS sendet und gleichzeitig auf der gleichen Funkressource ein Volumen VOL2 von Daten vom zweiten Fahrzeug empfängt, und
einer Bedingung C5:
$1/[W2.\log(1+\mu_{FD,1,2})]<1/[W2.\log(1+\mu_{HD,1,2})]+(VOL1.W2)/ [VOL2 . W1 . \log (1+\mu_{HD,BS,1}) ]$

- einen Aktivierungsschritt des Full-Duplex-Modus der Datenübertragung im Bereich des ersten Fahrzeugs, wenn die unter der Bedingung C4 und der Bedingung CS gewählte Bedingung erfüllt ist.

11. Computerprogramm, das Anweisungen zur Ausführung eines Kontrollverfahrens nach einem der Ansprüche 1 bis 10 aufweist, wenn das Programm von einem Computer ausgeführt wird.

12. Computerlesbarer Aufzeichnungsträger, auf dem ein Computerprogramm (Prog) nach Anspruch 11 aufgezeichnet ist.

13. Controller (CTRL), der konfiguriert ist, einen Datenübertragungsmodus zu kontrollieren, der von einem ersten Fahrzeug verwendet wird, um mit einem zweiten Fahrzeug und mit einer Basisstation eines drahtlosen Kommunikationsnetzwerks zu kommunizieren, wobei der Controller enthält:

- ein Bestimmungsmodul (7), das konfiguriert ist, zu bestimmen, ob eine Bedingung erfüllt ist, wobei die Bedingung ist:

eine Bedingung C1 : $I_{1,1} < I_{1,U}$ oder
eine Bedingung C2 : $(W1/W2) .\log(1+\mu_{HD,BS,1} ) < 1/\varepsilon$ mit $\varepsilon=1/\log (1+\mu_{FD,1,2}) - 1/\log (1+\mu_{HD,1,2})$ , wobei:

W1 und W2 je Bandbreiten der Übertragungskanäle zwischen dem ersten Fahrzeug und der Basisstation und zwischen dem zweiten Fahrzeug und dem ersten Fahrzeug bezeichnen;
$I_{1,1}$ ein Selbstinterferenzbereich ist, der im Bereich des ersten Fahrzeugs erreicht wird, wenn es im Full-Duplex arbeitet und Daten an die Basisstation auf einer Funkressource sendet, auf der es gleichzeitig Daten vom zweiten Fahrzeug empfängt;
$I_{1,u}$ ein Interferenzbereich ist, der im Bereich des ersten Fahrzeugs von einer dritten Kommunikationsvorrichtung erzeugt wird, wenn die dritte Kommunikationsvorrichtung Daten an die Basisstation auf einer Funkressource sendet, auf der gleichzeitig das erste Fahrzeug im Half-Duplex-Modus Daten vom

zweiten Fahrzeug empfängt;

$\mu_{HD,BS,1}$ ein Signal-zu-Interferenz-plus-RauschVerhältnis, SINR, ist, das von der Basisstation empfangen wird, wenn das erste Fahrzeug im Half-Duplex-Modus Daten an die Basisstation sendet;

$\mu_{FD,1,2}$ ein SINR-Verhältnis ist, das im Bereich des ersten Fahrzeugs empfangen wird, wenn das erste Fahrzeug im Full-Duplex-Modus Daten vom zweiten Fahrzeug auf einer Funkressource empfängt, auf der das erste Fahrzeug gleichzeitig Daten an die Basisstation sendet; und

$\mu_{HD,1,2}$ ein SINR-Verhältnis ist, das im Bereich des ersten Fahrzeugs empfangen wird, wenn das erste Fahrzeug im Half-Duplex-Modus Daten vom zweiten Fahrzeug empfängt;

- ein Aktivierungsmodul (8), das konfiguriert ist, einen Full-Duplex-Datenübertragungsmodus im Bereich des ersten Fahrzeugs zu aktivieren, um mit dem zweiten Fahrzeug und mit der Basisstation zu kommunizieren, wenn das Bestimmungsmodul bestimmt, dass die vordefinierte Bedingung erfüllt ist.

14. Übertragungssystem (1), das enthält:

- mindestens ein erstes Fahrzeug (V1), ein zweites Fahrzeug (V2) und eine Basisstation (BS) eines drahtlosen Kommunikationsnetzwerks, wobei das erste Fahrzeug und das zweite Fahrzeug miteinander Peer-to-Peer und mit der Basisstation kommunizieren können; und

- einen Controller (CTRL) nach Anspruch 13, der konfiguriert ist, einen Datenübertragungsmodus zu kontrollieren, der vom ersten Fahrzeug verwendet wird, um mit dem zweiten Fahrzeug und mit der Basisstation zu kommunizieren.

15. Übertragungssystem (1) nach Anspruch 14, wobei der Controller sich an Bord einer Basisstation oder in einer zentralisierten Verwaltungseinheit des drahtlosen Kommunikationsnetzwerks befindet.

## Claims

1. Method for controlling, by a controller (CTRL), a data-transmission mode intended to be used by a first vehicle (V1) to communicate with a second vehicle (V2) and with a base station (BS) of a wireless communication network, this method comprising:

- a first step (E20) of determining whether a condition is met, said condition being:

a condition C1: $I_{1,1} < I_{1,U}$
or a condition C2: $(W1/W2) \cdot \log(1+\mu_{HD,BS,1}) < 1/\varepsilon$
with $\varepsilon = 1/\log(1+\mu_{FD,1,2}) - 1/\log(1+\mu_{HD,1,2})$, where:

W1 and W2 designate the bandwidths of the transmission channels between the first vehicle and the base station, and between the second vehicle and the first vehicle, respectively;

$I_{1,1}$ is a self-interference level reached at the first vehicle when it operates in full-duplex mode and sends data to the base station via a radio resource over which it simultaneously receives data from the second vehicle;

$I_{1,U}$ is an interference level generated at the first vehicle by a third communication device, when the third communication device sends data to the base station via a radio resource over which the first vehicle, in half-duplex mode, simultaneously receives data from the second vehicle;

$\mu_{HD,BS,1}$ is a signal-to-interference-plus-noise ratio, SINR, received by the base station when the first vehicle, in half-duplex mode, sends data to the base station;

$\mu_{FD,1,2}$ is an SINR received at the first vehicle when the first vehicle, in full-duplex mode, receives data originating from the second vehicle via a radio resource over which the first vehicle simultaneously sends data to the base station; and

$\mu_{HD,1,2}$ is an SINR received at the first vehicle when the first vehicle, in half-duplex mode, receives data from the second vehicle;

- a step (E30) of activating a full-duplex data-transmission mode in the first vehicle in order to communicate with the second vehicle and with the base station if said condition is met.

2. Control method according to Claim 1, wherein the first determining step consists in determining whether the condition C1 is met and comprises comparing:

- a distance between the first vehicle and the third device; with
- a ratio, raised to the power of n, where n designates the inverse of a pathloss exponent:

of a product of a propagation factor multiplied by an emission power of the third device when said third device sends data to the base station via a radio resource over which the first vehicle, in half-duplex mode, simultaneously receives data from the second vehicle, and
of the self-interference level $I_{1,1}$;

the condition C1 being met if the distance is lower than the ratio.

3. Control method according to Claim 2, furthermore comprising:

- a step of receiving, from the first vehicle, the self-interference level $I_{1,1}$ or a self-interference factor of the first vehicle and an emission power of the first vehicle; and/or
- a step of receiving, from the third communication device or said base station, the emission power of the third communication device.

4. Control method according to Claim 2 or 3, wherein the distance between the first vehicle and the third communication device is determined from a position of the first vehicle, which position is measured by the first vehicle, and/or a position of the third communication device, which position is measured by the third device.

5. Control method according to any one of Claims 1 to 4, wherein the first determining step consists in determining whether the condition C1 is met, and if the condition C1 is not met, the method furthermore comprises:

- a second step of determining whether the condition C2 is met; and
- a step of activating the full-duplex data-transmission mode in the first vehicle if the condition C2 is met.

6. Control method according to any one of Claims 1 to 5, wherein the first determining step consists in determining whether the condition C1 is met, and if the condition C1 is not met, the method furthermore comprises:

- a third step (E40) of determining whether a condition C3:

$$\mu_{FD,1,1} < \mu_0 / [\exp(1/(B+C)-1]-1$$

is met with:

$$\mu_{FD,1,1} = I_{1,1} / (I_{oth}+N_{th})$$

$$B = 1/\log(1+\mu_0(1-\mu_{HD,1,U}))$$

$$C = W2/[W1.\log(1+\mu_{HD,BS,1})]$$

$$\mu_0 = P_2^{(1)} / (I_{oth}+N_{th})$$

$$\mu_{HD,1,U} = I_{1,U} / (I_{1,U}+I_{oth}+N_{th})$$

where:

$P_2^{(1)}$ is a power of the data received by the first vehicle from the second vehicle;
$I_{oth}$ is an interference level generated at the first vehicle by at least one fourth communication device sending data via a radio resource over which the first vehicle, in full-duplex mode, simultaneously sends data to the base station and receives data from the second vehicle or over which the first vehicle, in half-duplex mode, simultaneously receives data from the second vehicle; and

$N_{th}$ is a noise level received by the first vehicle;

- a step of activating the full-duplex data-transmission mode in the first vehicle if the condition C3 is met.

7. Control method according to Claim 6, furthermore comprising, if the condition C3 is not met:

- a fourth step (E50) of determining whether the condition C2 is met; and
- a step (E30) of activating the full-duplex data-transmission mode in the first vehicle if the condition C2 is met.

8. Control method according to any one of Claims 1 to 7, wherein the first, and where appropriate, the second, third and fourth determining steps are reproduced at various times.

9. Control method according to any one of Claims 1 to 8, wherein the first, and where appropriate, the second, third and fourth determining steps are carried out if a data-transmission rate between the second vehicle and the first vehicle is lower than or equal to a data-transmission rate between the first vehicle and the base station.

10. Control method according to Claim 9, furthermore comprising, when the data-transmission rate between the second vehicle and the first vehicle is higher than the data-transmission rate between the first vehicle and the base station:

- a fifth step of determining whether a condition is met, said condition being chosen among:

a condition C4: $\mu_{FD,BS,1} > \exp(1/A) - 1$
with $A = \alpha/\log(1+\mu_{HD,1,2}) + 1/\log(1+u_{HD,BS,1})$ and $\alpha - (VOL2/VOL1) \cdot (W1/W2)$, where $\mu_{FD,BS,1}$ designates the SINR received by the base station when the first vehicle, in full-duplex mode, sends a volume VOL1 of data to the base station BS and simultaneously receives over the same radio resource a volume VOL2 of data from the second vehicle, and
a condition C5:

$$1/[\texttt{W2.log}(1+\mu_{FD,1,2})] < 1/[\texttt{W2.log}(1+\mu_{HD,1,2})] + (\texttt{VOL1.W2})/$$
$$[\texttt{VOL2.W1.log}(1+\mu_{HD,BS,1})]$$

- a step of activating the full-duplex data-transmission mode in the first vehicle if the condition chosen among the condition C4 and the condition C5 is met.

11. Computer program containing instructions for executing a control method according to any one of Claims 1 to 10, when said program is executed by a computer.

12. Computer-readable storage medium on which a computer program (Prog) according to Claim 11 is stored.

13. Controller (CTRL) configured to control a data-transmission mode used by a first vehicle to communicate with a second vehicle and with a base station of a wireless communication network, said controller comprising:

- a determining module (7) configured to determine whether a condition is met, said condition being:

a condition C1: $I_{1,1} < I_{1,U;}$ or
a condition C2: $(W1/W2) \cdot \log(1+\mu_{HD,BS,1}) < 1/\varepsilon$ with $\varepsilon = 1/\log(1+\mu_{FD,1,2}) - 1/\log(1+\mu_{HD,1,2})$, where:

W1 and W2 designate the bandwidths of the transmission channels between the first vehicle and the base station, and between the second vehicle and the first vehicle, respectively;
$I_{1,1}$ is a self-interference level reached at the first vehicle when it operates in full-duplex mode and sends data to the base station via a radio resource over which it simultaneously receives data from the second vehicle;
$I_{1,U}$ is an interference level generated at the first vehicle by a third communication device, when the third communication device sends data to the base station via a radio resource over which the first vehicle, in half-duplex mode, simultaneously receives data from the second vehicle;

$\mu_{HD,BS,1}$ is a signal-to-interference-plus-noise ratio, SINR, received by the base station when the first vehicle, in half-duplex mode, sends data to the base station;

$\mu_{FD,1,2}$ is an SINR received at the first vehicle when the first vehicle, in full-duplex mode, receives data originating from the second vehicle via a radio resource over which the first vehicle simultaneously sends data to the base station; and

$\mu_{HD,1,2}$ is an SINR received at the first vehicle when the first vehicle, in half-duplex mode, receives data from the second vehicle;

- an activating module (8) configured to activate a full-duplex data-transmission mode in the first vehicle in order to communicate with the second vehicle and with the base station if the determining module determines that said predefined condition is met.

14. Transmitting system (1), comprising:

- at least a first vehicle (V1), a second vehicle (V2) and a base station (BS) of a wireless communication network, the first vehicle and the second vehicle being able to communicate together peer-to-peer and with the base station; and
- a controller (CTRL) according to Claim 13, configured to control a data-transmission mode used by the first vehicle to communicate with the second vehicle and with the base station.

15. Transmitting system (1) according to Claim 14, wherein the controller is located in a base station or in a centralized management entity of the wireless communication network.

[Fig. 1]

[Fig. 2]

[Fig. 3]

EP 3 723 318 B1

[Fig. 4]

30

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016111638 A

**Littérature non-brevet citée dans la description**

- **T.HUUSARI et al.** Wideband Self-Adaptive RF Cancellation Circuit for Full-Duplex Radio : Operating Principle and Measurements. *IEEE Vehicular Technology Conference,* Mars 2015

- **J.M.KELIF et al.** *Meeting Energy-Efficient and QoS Requirements of 5G using D2D communications,* 18 Décembre 2017, https://arxiv.ora/abs/1712.06461